# EUROPEAN PATENT APPLICATION

(11) **EP 4 422 217 A1**
(43) Date of publication of application: **28.08.2024**
(21) Application number: 22883835.5
(22) Date of filing: 07.10.2022
(51) Int. Cl.: H04W 4/02, H04W 4/20, H04W 4/70, H04W 4/80, H04W 88/02

(54) **ELECTRONIC DEVICE FOR PROVIDING LOCATION-BASED SERVICE AND OPERATION METHOD THEREOF**

(30) Priority: 21.10.2021 KR 20210141111
(71) Applicant: Samsung Electronics Co., Ltd., Suwon-si, Gyeonggi-do 16677 (KR)
(72) Inventor: BAE, Sunwook, Suwon-si, Gyeonggi-do 16677 (KR); KIM, Jihye, Suwon-si, Gyeonggi-do 16677 (KR); CHO, Bermjin, Suwon-si, Gyeonggi-do 16677 (KR); JO, Yongwoon, Suwon-si, Gyeonggi-do 16677 (KR); CHO, Jaeyong, Suwon-si, Gyeonggi-do 16677 (KR); SONG, Gajin, Suwon-si, Gyeonggi-do 16677 (KR)
(74) Representative: Gulde & Partner
(86) International application number: PCT/KR2022/015136
(87) International publication number: WO 2023/068612

(57) **Abstract**

Provided according to an embodiment is an electronic device comprising a communication module and at least one processor operatively connected to the communication module, wherein the at least one processor is, through the communication module, configured to: receive, from a first external electronic device, an input signal of the first external electronic device; acquire at least one of the location of the first external electronic device and the direction in which the first external electronic device is oriented; and, on the basis of the at least one of the location of the first external electronic device and the direction in which the first external electronic device is oriented, control the operation of at least one second external electronic device or the electronic device, in accordance with the control arrangement configured in the input signal, for controlling the operation of the at least one second external electronic device or the electronic device. Other embodiments may be possible.

## Description

### [Technical Field]

The disclosure relates to an electronic device for providing a location-based service and an operating method thereof.

### [Background Art]

The Internet, which is a human centered connectivity network where humans generate and consume information, is now evolving to the Internet of things (IoT) network where distributed entities, such as things, exchange and process information. The Internet of everything (IoE) technology may be an example in which a big data processing technology through connection with a cloud server is combined with the IoT technology.

As technology elements, such as a sensing technology, a wired/wireless communication and network infrastructure, a service interface technology, and a security technology have been demanded for implementing the IoT technology, and various technologies for a connection between things such as a sensor network, a machine-to-machine (M2M) communication, machine type communication (MTC), and so forth have been recently researched.

Such an IoT environment may provide intelligent Internet technology (IT) services that create a new value to human life by collecting and analyzing data generated among connected things. The IoT technology may be applied to various services such as a smart home service, a smart building service, a smart city service, a smart car service or connected car service, a smart grid service, a health care service, a smart appliance service, and an advanced medical service through convergence and combination between an existing IT technology and various industrial applications.

Among various services to which the IoT technology is applied, in a case of the smart home service, various IoT-based services may be provided using various IoT devices.

An electronic device may provide an automation service which controls an operation (e.g., power on/off, volume up, volume down, and light on/off) of second external electronic devices (e.g., IoT devices) existing in various spaces within a wireless communication network (e.g., an IoT network) in which a smart home service is provided by interworking with a first external electronic device (e.g., a smart tag (e.g., Samsung Galaxy Smart Tag), a smart button, or a wearable electronic device (e.g., a smart watch). Further, the electronic device may provide a find service which generates a ring informing a location of the electronic device itself by interworking with the first external electronic device if there is a request of the first external electronic device.

Accordingly, when an application (e.g., Samsung SmartThings application) for executing a location-based service (e.g., an automation service and a find service) is first executed, a user of the electronic device may manually set, via a user interface (UI), control configuration which corresponds to the automation service and the find service corresponding to each of input signals (e.g., key signals (e.g., a click signal, a long press signal, and a double click signal).

However, the location of the first external electronic device is not considered when the control configuration for the automation service is set, and therefore, if the location of the first external electronic device changes, the user of the electronic device needs to set control configurations suitable for the first external electronic device whose location has changed. In this case, the user of the electronic device needs to manually modify control configurations which have already been set, and the manual modification of the control configurations causes inconvenience to the user.

Additionally, the location of the first external electronic device and a location of the electronic device are not considered when control configuration for the find service is set. So, if a distance between the electronic device and the first external electronic device is greater or equal to a threshold distance, a ring is generated in the electronic device even though a user of the first external electronic device may not hear the ring generated in the electronic device, so it causes inconvenience to the user of the electronic device.

So, there is a need for a scheme which is capable of automatically controlling operations of the second external electronic device based on the location of the first external electronic device without the user of the electronic device having to manually modify the control configurations for the automation service via the UI of the application when the location of the first external electronic device changes, and preventing a case that the ring unnecessarily informing the location of the electronic device is generated in the electronic device if the distance between the electronic device and the first external electronic device is greater than or equal to the threshold distance.

### [Detailed Description of the Invention]

### [Technical Problem]

According to an embodiment of the disclosure, an electronic device may include a communication module, and at least one processor operatively connected with the communication module.

According to an embodiment of the disclosure, the at least one processor may be configured to receive an input signal of a first external electronic device from the first external electronic device via the communication module.

According to an embodiment of the disclosure, the at least one processor may be further configured to obtain at least one of a location of the first external electronic device or an orientation direction of the first external electronic device.

According to an embodiment of the disclosure, the at least one processor may be further configured to control an operation of at least one second external electronic device or the electronic device corresponding to control configuration for controlling the operation of the at least one second external electronic device or the electronic device which is set for the input signal, based on the at least one of the location of the first external electronic device or the orientation direction of the first external electronic device.

According to an embodiment of the disclosure, a third external electronic device may include a communication module, and at least one processor operatively connected with the communication module.

According to an embodiment of the disclosure, the at least one processor may be configured to receive, from an electronic device via the communication module, a signal requesting to perform a control action set for an input signal of a first external electronic device.

According to an embodiment of the disclosure, the at least one processor may be further configured to transmit, via the communication module, a signal requesting to perform the control action to at least one target second external electronic device which corresponds to information about the at least one target second external electronic device in which the control action is to be performed among the at least one second external electronic device included in the received signal.

According to an embodiment of the disclosure, a third external electronic device may include a communication module, and at least one processor operatively connected with the communication module.

According to an embodiment of the disclosure, the at least one processor may be configured to receive, from an electronic device via the communication module, a signal requesting to perform a control action set for an input signal of a first external electronic device.

According to an embodiment of the disclosure, the at least one processor may be further configured to perform the control action based on at least one of a location of the first external electronic device or an orientation direction of the first external electronic device included in the received signal.

According to an embodiment of the disclosure, an operating method of an electronic device may include receiving an input signal of a first external electronic device from the first external electronic device.

According to an embodiment of the disclosure, the operating method may further include obtaining at least one of a location of the first external electronic device or an orientation direction of the first external electronic device.

According to an embodiment of the disclosure, the operating method may further include controlling an operation of at least one second external electronic device or the electronic device corresponding to control configuration for controlling the operation of the at least one second external electronic device or the electronic device which is set for the input signal, based on the at least one of the location of the first external electronic device or the orientation direction of the first external electronic device.

According to an embodiment of the disclosure, an operating method of a third external electronic device may include receiving, from an electronic device, a signal requesting to perform a control action set for an input signal of a first external electronic device.

According to an embodiment of the disclosure, the operating method may further include transmitting a signal requesting to perform the control action to at least one target second external electronic device which corresponds to information about the at least one target second external electronic device in which the control action is to be performed among the at least one second external electronic device included in the received signal.

According to an embodiment of the disclosure, an operating method of a third external electronic device may include receiving, from an electronic device, a signal requesting to perform a control action set for an input signal of a first external electronic device.

According to an embodiment of the disclosure, the operating method may further include performing the control action based on at least one of a location of the first external electronic device or an orientation direction of the first external electronic device included in the received signal.

According to an embodiment, a non-transitory computer readable storage medium may include one or more programs, the one or more programs comprising instructions configured to, when executed by at least one processor of an electronic device, cause the electronic device to receive an input signal of a first external electronic device from the first external electronic device.

According to an embodiment, the instructions may be further configured to cause the electronic device to obtain at least one of a location of the first external electronic device or an orientation direction of the first external electronic device.

According to an embodiment, the instructions may be further configured to cause the electronic device to control an operation of at least one second external electronic device or the electronic device corresponding to control configuration for controlling the operation of the at least one second external electronic device or the electronic device which is set for the input signal, based on the at least one of the location of the first external electronic device or the orientation direction of the first external electronic device.

According to an embodiment, a non-transitory computer readable storage medium may include one or more programs, the one or more programs comprising instructions configured to, when executed by at least one processor of a third external electronic device, cause the third external electronic device to receive, from an electronic device, a signal requesting to perform a control action set for an input signal of a first external electronic device.

According to an embodiment, the instructions may be further configured to cause the third external electronic device to transmit a signal requesting to perform the control action to at least one target second external electronic device which corresponds to information about the at least one target second external electronic device in which the control action is to be performed among the at least one second external electronic device included in the received signal.

According to an embodiment, a non-transitory computer readable storage medium may include one or more programs, the one or more programs comprising instructions configured to, when executed by at least one processor of a third external electronic device, cause the third external electronic device to receive, from an electronic device, a signal requesting to perform a control action set for an input signal of a first external electronic device.

According to an embodiment, the instructions may be further configured to cause the third external electronic device to perform the control action based on at least one of a location of the first external electronic device or an orientation direction of the first external electronic device included in the received signal.

### [Brief Description of Drawings]

FIG. 1 is a block diagram illustrating an electronic device in a network environment according to an embodiment.
FIG. 2 is a diagram illustrating an example of a system structure in a wireless communication network according to an embodiment.
FIG. 3 is a diagram illustrating another example of a system structure in a wireless communication network according to an embodiment.
FIG. 4 is a block diagram illustrating an example of an internal structure of an electronic device according to an embodiment.
FIG. 5 is a block diagram illustrating an example of an internal structure of a third external electronic device according to an embodiment.
FIG. 6 is a diagram illustrating an example of a process for providing a location-based service in a wireless communication network according to an embodiment.
FIGS. 7a and 7b are diagrams illustrating an example of a screen in a case of setting control configuration for an event signal of a first external electronic device by designating a control action without designating device information about a second external electronic device according to an embodiment.
FIGS. 8a and 8b are diagrams illustrating an example of a screen in a case of setting control configuration for an event signal of a first external electronic device by designating location information and a control action without designating device information about a second external electronic device according to an embodiment.
FIG. 9 is a diagram illustrating an example of an operation of selecting a target second external electronic device among second external electronic devices according to an embodiment.
FIG. 10 is a diagram illustrating another example of an operation of selecting a target second external electronic device among second external electronic devices based on a location of a first external electronic device according to an embodiment.
FIG. 11 is a diagram illustrating still another example of an operation of selecting a target second external electronic device among second external electronic devices based on a location of a first external electronic device according to an embodiment.
FIG. 12 is a diagram illustrating another example of a process for providing a location-based service in a wireless communication network according to an embodiment.
FIG. 13 is a diagram illustrating still another example of a process for providing a location-based service in a wireless communication network according to an embodiment.
FIG. 14 is a diagram illustrating still another example of a process for providing a location-based service in a wireless communication network according to an embodiment.
FIG. 15 is a diagram illustrating an example of a screen in a case of setting control configuration for an event signal of a first external electronic device by designating device information about an electronic device and a control action according to an embodiment.
FIG. 16 is a diagram illustrating an example of an operating process of an electronic device according to an embodiment.
FIG. 17 is a diagram illustrating another example of an operating process of an electronic device according to an embodiment.
FIG. 18 is a diagram illustrating still another example of an operating process of an electronic device according to an embodiment.
FIG. 19 is a diagram illustrating still another example of an operating process of an electronic device according to an embodiment.

### [Mode for Carrying out the Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs, and/or the like. Therefore, the definitions of the terms should be made based on the contents throughout the specification.

It should be noted that the technical terms used herein are only used to describe specific embodiments, and are not intended to limit the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", and/or the like should not be interpreted to necessarily include all elements or all operations described in the specification, and should be interpreted to be allowed to exclude some of them or further include additional elements or operations.

Alternatively, the terms including an ordinal number, such as expressions "a first", "a second", and/or the like may be used to described various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

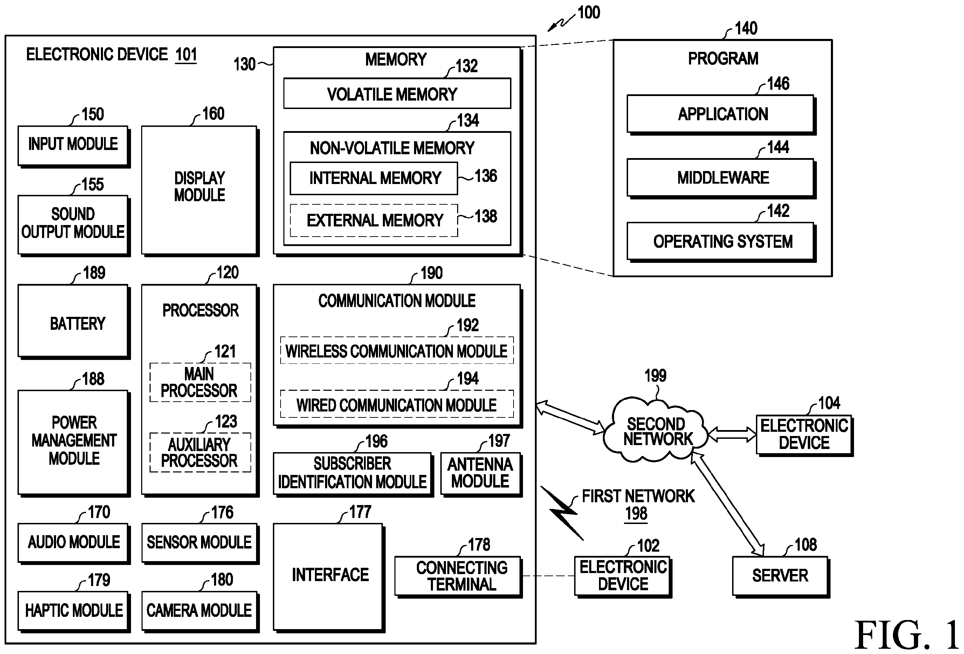

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to an embodiment and include various changes, equivalents, or replacements for an embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

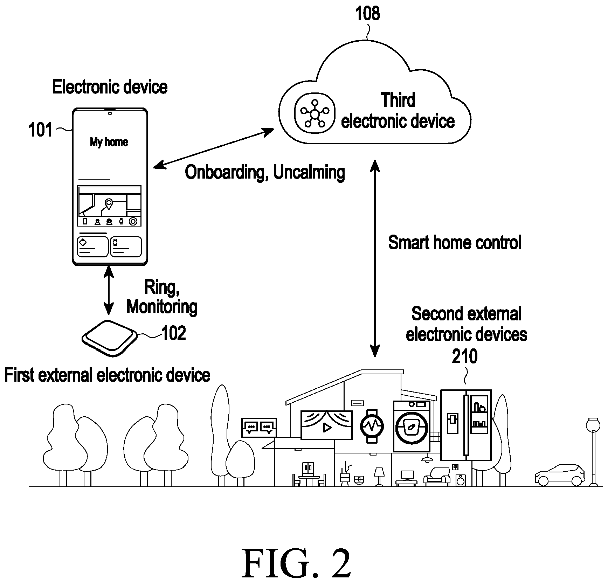

FIG. 2 is a diagram illustrating an example of a system structure in a wireless communication network according to an embodiment.

Referring to FIG. 2, a wireless communication network may be an internet of things: IoT) network (e.g., a smart home network). In the wireless communication network, a system may include an electronic device 101, a first external electronic device 102, a plurality of second external electronic devices 210, or a third external electronic device 108.

According to an embodiment, the electronic device 101 may be an electronic device 101 in FIG. 1, the first external electronic device 102 may be an electronic device 102 in FIG. 1, and the third external electronic device 108 may be a server 108 in FIG. 1. According to an embodiment, each of the plurality of second external electronic devices 210 may be a device for providing a location-based service (e.g., an automation service, and a find search) under the control of the electronic device 101 and the third external electronic device 108. According to an embodiment, each of the plurality of second external electronic devices 210 may be an IoT device (e.g., home appliances such as a TV, a light, an air conditioner, an oven, or a speaker). According to an embodiment, each of the plurality of second external electronic devices 210 may be located in a home space. The first external electronic device 102 may provide the location-based service by interworking with the electronic device 101. For example, the first external electronic device 102 may be a smart tag (e.g., a Samsung Galaxy smart tag), a smart button, or a wearable electronic device (e.g., a smart watch). According to an embodiment, the third external electronic device 108 may be a server (e.g., an IoT server) or a hub. In an embodiment, the hub may be located in the home space. In an embodiment, the system may further include other external electronic devices (e.g., a cloud server or an application market server).

According to an embodiment, the electronic device 101 may provide the location-based service by interworking with the first external electronic device 102. The electronic device 101 may provide the location-based service based on a location of the first external electronic device 102, an orientation direction of the first external electronic device 102, or a distance between the electronic device 101 and the first external electronic device 102.

In an embodiment, the electronic device 101 may obtain the location of the first external electronic device 102 and the orientation direction of the first external electronic device 102 based on at least one of a Bluetooth low energy (BLE) scheme, a ultra wide band (UWB) scheme, or a global positioning system (GPS) scheme. In an embodiment, the electronic device 101 may obtain the orientation direction of the first external electronic device 102 based on the UWB scheme. In an embodiment, the electronic device 101 may obtain (or measure) the distance between the electronic device 101 and the first external electronic device 102 based on at least one of the BLE scheme or the UWB scheme. In an embodiment, the wireless communication network may further include at least one fourth external electronic device (e.g., an anchor), and the electronic device 101 may obtain the location of the first external electronic device 102 and the orientation direction of the first external electronic device 102 based on a distance between the at least one fourth external electronic device and the first external electronic device 102 and information about the orientation direction of the first external electronic device 102 which is received from the at least one fourth external electronic device. The scheme used for obtaining the location of the first external electronic device 102, the orientation direction of the first external electronic device 102, or the distance between the electronic device 101 and the first external electronic device 102 is not limited to the BLE scheme, the UWB scheme, or the GPS scheme.

According to an embodiment, the third external electronic device 108 may receive data from the plurality of second external electronic devices 210. According to an embodiment, the third external electronic device 108 may communicate with the plurality of second external electronic devices 210 and the electronic device 101 based on a first communication scheme or a second communication scheme. According to an embodiment, the third external electronic device 108 may communicate with the plurality of second external electronic devices 210 based on the first communication scheme, and communicate with the electronic device 101 based on the second communication scheme. The first communication scheme may be different from, or may be the same as, the second communication scheme. If the first communication scheme is different from the second communication scheme, the first communication scheme may be a communication scheme which consumes relatively less power than the second communication scheme. For example, a Zigbee scheme may be used for a communication between the plurality of second external electronic devices 210 and the third external electronic device 108, and a Wi-Fi scheme may be used for a communication between the electronic device 101 and the third external electronic device 108. According to an embodiment, the third external electronic device 108 may communicate with at least some of the plurality of second external electronic devices 210 based on a third communication scheme, not the first communication scheme. For example, the ZigBee scheme may be used for a communication between the at least some of the plurality of second external electronic devices 210 and the third external electronic device 108, and a Z-Wave scheme may be used for a communication between another part of the plurality of second external electronic devices 210 and the third external electronic device 108. For example, the second external electronic devices 210 which communicate based on the ZigBee scheme may communicate with the third external electronic device 108 with relatively low power, and the second external electronic devices 210 which communicate based on the Z-Wave scheme may obtain higher power efficiency than the second external electronic devices 210 which communicate based on the ZigBee scheme.

For example, the third external electronic device 108 may collect data received from the plurality of second external electronic devices 210 existing in the wireless communication network based on a Zigbee communication or a Z-Wave communication, and transmit the collected data to the electronic device 101 or another external electronic device (e.g., the hub).

According to an embodiment, the plurality of second external electronic devices 210 may be located in various spaces (e.g., a living room, a family room, a kitchen, an entrance, and a laundry storage in a home space, and first to Nth offices, a kitchen, and an entrance in an office space) within the wireless communication network, and communicate with the electronic device 101 through the third external electronic device 108.

According to an embodiment, the plurality of second external electronic devices 210 may include various types of electronic devices which operate based on a service to which an IoT technology is applied, such as a smart home service. In an embodiment, each of the plurality of second external electronic devices 210 may include a sensor for detecting a surrounding environment or a switch. If the plurality of second external electronic devices 210 are impossible of communicating directly, the plurality of second external electronic devices 210 may communicate with the electronic device 101 via another external electronic device connected to the electronic device 101. The plurality of second external electronic devices 210 according to an embodiment are not limited to the types of electronic devices described above, and may include all electronic devices capable of communicating with the electronic device 101. The electronic device 101 may perform an 1:N communication with the second external electronic devices 210.

According to an embodiment, the plurality of second external electronic devices 210 may operate based on a user input or may operate automatically if a set condition is satisfied. For example, when an event occurs, the plurality of second external electronic devices 210 may transmit data (or a signal) to the third external electronic device 108 in response to the occurrence of the event. For example, data responding to the occurrence of the event may include a device identifier (ID) of a corresponding second external electronic device, and the device ID may be set at the time of manufacturing the second external electronic device.

According to an embodiment, the electronic device 101 may receive data from the plurality of second external electronic devices 210 and display a screen corresponding to the received data. According to an embodiment, when an IoT-based application (e.g., a Samsung SmartThings application) for controlling the plurality of second external electronic devices 210 arranged in separate spaces within the wireless communication network is executed, the electronic device 101 may display a UI related to the executed application.

According to an embodiment, the first external electronic device 102 may be a device which implements the location-based service by interworking with the electronic device 101. In an embodiment, the first external electronic device 102 may include a plurality of keys, key signals corresponding to the plurality of keys included in the first external electronic device 102, or key signals corresponding to a combination of at least two among the plurality of keys included in the first external electronic device 102 may be event signals, and the event signals of the first external electronic device 102 are not limited thereto. For example, the event signals of the first external electronic device 102 may include a click signal, a long press signal, and a double click signal. In an embodiment, the click signal may be an event signal corresponding to clicking a button key of the first external electronic device 102 once, the long press signal may be an event signal corresponding to clicking the button key of the first external electronic device 102 for more than set time, and the double click signal may be an event signal corresponding to clicking the button key of the first external electronic device 102 twice.

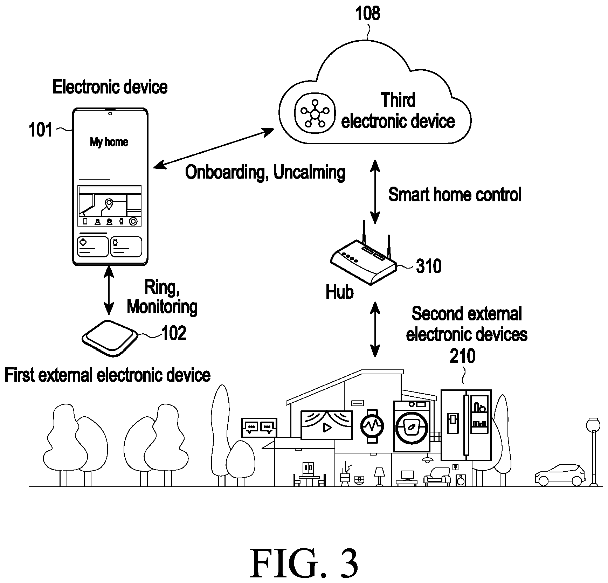

FIG. 3 is a diagram illustrating another example of a system structure in a wireless communication network according to an embodiment.

Referring to FIG. 3, a wireless communication network may be an IoT network (e.g., a smart home network). In the wireless communication network, a system may include an electronic device 101, a first external electronic device 102, a plurality of second external electronic devices 210, a third external electronic device 108, or another external electronic device (e.g., a hub 310). According to an embodiment, each of the plurality of second external electronic devices 210 may be located in the home space. In an embodiment, the hub may be located in the home space.

The system structure in the wireless communication network in FIG. 3 may be implemented similarly to a system structure in a wireless communication network described in FIG. 2 except for the hub 310. In FIG. 2, the third external electronic device 108 may directly communicate with the plurality of second external electronic devices 210, so the third external electronic device 108 may directly request the plurality of second external electronic devices 210 to perform an operation corresponding to the location-based service. In FIG. 3, the third external electronic device 108 does not communicate directly with the plurality of second external electronic devices 210, but may communicate with the plurality of second external electronic devices 210 through the hub 310, so the third external electronic device 108 may request the plurality of second external electronic devices 210 to perform the operation corresponding to the location-based service through the hub 310. According to an embodiment, the third external electronic device 108 in FIG. 2 may be implemented as a hub, but even though the third external electronic device 108 in FIG. 2 is implemented as the hub, the third external electronic device 108 in FIG. 2 may operate in a different form than the hub 310 in FIG. 3. For example, if the third external electronic device 108 in FIG. 2 is implemented as the hub, the third external electronic device does not communicate with the plurality of second external electronic devices 210 through a separate hub, but may communicate directly with the plurality of second external electronic devices 210 like a server.

The system structure including the electronic device 101, the first external electronic device 102, the plurality of second external electronic devices 210, and the third external electronic device 108 excluding the hub 310 be implemented similarly to that described in FIG. 2, so a detailed description thereof will be omitted herein.

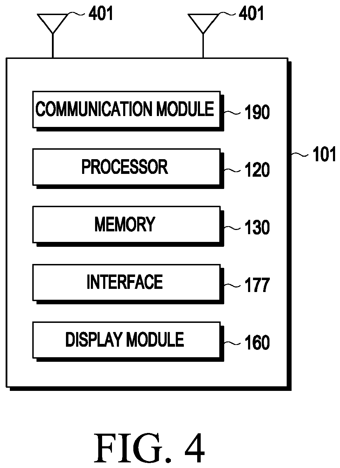

FIG. 4 is a block diagram illustrating an example of an internal structure of an electronic device according to an embodiment.

Referring to FIG. 4, an electronic device 101 (e.g., an electronic device 101 in FIG. 1, 2, or 3) may be a device implementing a location-based service (e.g., an automation service and a find service). The electronic device 101 may be may be a device supporting a long term evolution (LTE) scheme, Zigbee, Z-Wave, a Wi-Fi scheme, a BLE scheme, a UWB scheme, and a GPS scheme. The electronic device 101 may include a communication module 190 (e.g., a communication module 190 in FIG. 1) for transmitting and receiving signals to and from a first external electronic device (e.g., an electronic device 102 in FIG. 1, or a first external electronic device 102 in FIG. 2 or 3), a plurality of second external electronic devices (e.g., second external electronic devices 210 in FIG. 2 or 3), and a third external electronic device (e.g., a server 108 in FIG. 1 or a third external electronic device 108 in FIG. 2 or 3) using one or more antennas 401. In an embodiment, the one or more antennas 401 may be implemented as a part of an antenna module 198 in FIG. 1.

According to an embodiment, the communication module 190 may include a plurality of communication circuits, and the plurality of communication circuits may include a communication circuit which is based on the LTE scheme, the BLE scheme, the UWB scheme, the Zigbee scheme, the Z-wave scheme, and the Wi-Fi scheme. According to an embodiment, the electronic device 101 may not include a separate communication circuit which is based on each of the LTE scheme, the BLE scheme, the UWB scheme, the Zigbee scheme, the Z-Wave scheme, and the Wi-Fi scheme, and may include a communication circuit which is based on at least two of the LTE scheme, the BLE scheme, the UWB scheme, the Zigbee scheme, the Z-Wave scheme, and the Wi-Fi scheme, or all of the LTE scheme, the BLE scheme, the UWB scheme, the Zigbee scheme, the Z-Wave scheme, and the Wi-Fi scheme. According to an embodiment, the communication circuit which is based on the at least two of the LTE scheme, the BLE scheme, the UWB scheme, the Zigbee scheme, the Z-Wave scheme, and the Wi-Fi scheme, or all of the LTE scheme, the BLE scheme, the UWB scheme, the Zigbee scheme, the Z-Wave scheme, and the Wi-Fi scheme may be the communication module 190.

The electronic device 101 may include an interface 177 (e.g., an interface 177 in FIG. 1) which provides a wired and/or wireless interface for communicating with components outside a network. In an embodiment, at least a portion of the one or more antennas 401, the communication module 190, or the interface 177 may be implemented as at least a portion of the communication module 190 and the antenna module 198 in FIG. 1.

The electronic device 101 may include a processor 120 (e.g., a processor 120 in FIG. 1) which may be implemented with one or more single-core processors or one or more multi-core processors, and a memory 130 (e.g., a memory 130 in FIG. 1) which stores instructions for an operation of the electronic device 101.

According to an embodiment, the memory 130 may include a UI related to an application (e.g., a Samsung SmartThings application) for executing a location-based service (e.g., an automation service and a find service), and images, user information, documents, databases, or related data for providing the UI. For example, the memory 130 may store various information related to a plurality of second external electronic devices related to each space in the wireless communication network.

According to an embodiment, when an application for executing the location-based service is executed under the control of the processor 120, a display module 160 (e.g., a display module 160 in FIG. 1) may display a UI related to the executed application.

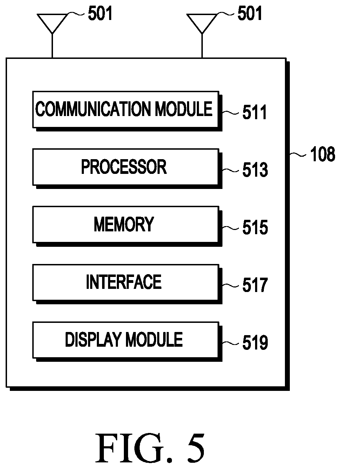

FIG. 5 is a block diagram illustrating an example of an internal structure of a third external electronic device according to an embodiment.

Referring to FIG. 5, a third external electronic device 108 (e.g., a server 108 in FIG. 1, or a third external electronic device 108 in FIG. 2, or 3) may be a device implementing a location-based service (e.g., an automation service and a find service). The third external electronic device 108 may be may be a device supporting an LTE scheme, Zigbee, Z-Wave, a Wi-Fi scheme, a BLE scheme, a UWB scheme, and a GPS scheme. The third external electronic device 108 may include a communication module 511 for transmitting and receiving signals to and from an electronic device 101 (e.g., an electronic device 101 in FIG. 1, 2, or 3), a first external electronic device (e.g., an electronic device 102 in FIG. 1, or a first external electronic device 102 in FIG. 2 or 3), and a plurality of second external electronic devices (e.g., second external electronic devices 210 in FIG. 2 or 3) using one or more antennas 501.

According to an embodiment, the communication module 511 may include a plurality of communication circuits, and the plurality of communication circuits may include a communication circuit which is based on the LTE scheme, the BLE scheme, the UWB scheme, the Zigbee scheme, the Z-wave scheme, and the Wi-Fi scheme. According to an embodiment, the third external electronic device 108 may not include a separate communication circuit which is based on each of the LTE scheme, the BLE scheme, the UWB scheme, the Zigbee scheme, the Z-Wave scheme, and the Wi-Fi scheme, and may include a communication circuit which is based on at least two of the LTE scheme, the BLE scheme, the UWB scheme, the Zigbee scheme, the Z-Wave scheme, and the Wi-Fi scheme, or all of the LTE scheme, the BLE scheme, the UWB scheme, the Zigbee scheme, the Z-Wave scheme, and the Wi-Fi scheme. According to an embodiment, the communication circuit which is based on the at least two of the LTE scheme, the BLE scheme, the UWB scheme, the Zigbee scheme, the Z-Wave scheme, and the Wi-Fi scheme, or all of the LTE scheme, the BLE scheme, the UWB scheme, the Zigbee scheme, the Z-Wave scheme, and the Wi-Fi scheme may be the communication module 511.

The third external electronic device 108 may include an interface 517 which provides a wired and/or wireless interface for communicating with components outside a network. The third external electronic device 108 may include a processor 513 which may be implemented with one or more single-core processors or one or more multi-core processors, and a memory 515 which stores instructions for an operation of the third external electronic device 108.

According to an embodiment, the memory 515 may include various data related to an application (e.g., a Samsung SmartThings application) for executing a location-based service (e.g., an automation service and a find service). For example, the memory 515 may store various information related to a plurality of second external electronic devices related to each space in the wireless communication network.

According to an embodiment, when an application for executing the location-based service is executed under the control of the processor 513, a display module 519 may display various information related to the executed application.

An embodiment of the disclosure may provide an electronic device for providing a location-based service and an operating method thereof.

An embodiment of the disclosure may provide an electronic device for controlling operations of a second external electronic device based on at least one of a location of a first external electronic device or an orientation direction of the first external electronic device and an operating method thereof.

An embodiment of the disclosure may provide an electronic device for controlling an operation of the electronic device based on a distance between the electronic device and a first external electronic device and an operating method thereof.

According to an embodiment of the disclosure, an electronic device (e.g., an electronic device 101 in FIG. 1, 2, 3, or 4) may include a communication module (e.g., a communication module 190 in FIG. 1 or 4), and at least one processor (e.g., a processor 120 in FIG. 1 or 4) operatively connected with the communication module (e.g., the communication module 190 in FIG. 1 or 4).

According to an embodiment of the disclosure, the at least one processor (e.g., the processor 120 in FIG. 1 or 4) may be configured to receive an input signal of a first external electronic device (an electronic device 102 in FIG. 1, or a first external electronic device 102 in FIG. 2, 3, or 5) from the first external electronic device (the electronic device 102 in FIG. 1, or the first external electronic device 102 in FIG. 2, 3, or 5) via the communication module (e.g., the communication module 190 in FIG. 1 or 4).

According to an embodiment of the disclosure, the at least one processor (e.g., the processor 120 in FIG. 1 or 4) may be further configured to obtain at least one of a location of the first external electronic device (the electronic device 102 in FIG. 1, or the first external electronic device 102 in FIG. 2, 3, or 5) or an orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be further configured to control an operation of at least one second external electronic device (e.g., second external electronic devices 210 in FIG. 2 or 3) or the electronic device (e.g., the electronic device 101 in FIG. 1, 2, 3, or 4) corresponding to control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be configured to select, among the at least one second external electronic device (e.g., the second external electronic devices 210 in FIG. 2 or 3), at least one target second external electronic device (e.g., the second external electronic devices 210 in FIG. 2 or 3) in which a control action included in the control configuration is to be performed, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be configured to transmit a signal requesting to perform the control action to a third external electronic device (e.g., a server 108 in FIG. 1, or a third external electronic device 108 in FIG. 2, 3, or 5) via the communication module (e.g., the communication module 190 in FIG. 1 or 4).

According to an embodiment of the disclosure, the signal requesting to perform the control action may include information about the at least one target second external electronic device (e.g., the second external electronic devices 210 in FIG. 2 or 3).

According to an embodiment of the disclosure, the at least one processor (e.g., the processor 120 in FIG. 1 or 4) may be configured to transmit, to a third external electronic device (e.g., a server 108 in FIG. 1, or a third external electronic device 108 in FIG. 2, 3, or 5) via the communication module (e.g., the communication module 190 in FIG. 1 or 4), a signal requesting to perform a control action included in the control configuration.

According to an embodiment of the disclosure, the signal requesting to perform the control action may include information about the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be configured to refrain from performing a control action included in the control configuration, if a distance between the first external electronic device (the electronic device 102 in FIG. 1, or the first external electronic device 102 in FIG. 2, 3, or 5) and the electronic device (e.g., the electronic device 101 in FIG. 1, 2, 3, or 4) exceeds a threshold distance.

According to an embodiment of the disclosure, the at least one processor (e.g., the processor 120 in FIG. 1 or 4) may be further configured to set the control configuration for controlling the operation of the at least one second external electronic device (e.g., the second external electronic devices 210 in FIG. 2 or 3) or the electronic device (e.g., the electronic device 101 in FIG. 1, 2, 3, or 4) in each of input signals of the first external electronic device (the electronic device 102 in FIG. 1, or the first external electronic device 102 in FIG. 2, 3, or 5).

According to an embodiment of the disclosure, the control configuration includes a control action to be performed by the at least one second external electronic device (e.g., the second external electronic devices 210 in FIG. 2 or 3) or the electronic device (e.g., the electronic device 101 in FIG. 1, 2, 3, or 4), or includes the control action to be performed by the at least one second external electronic device (e.g., the second external electronic devices 210 in FIG. 2 or 3) or the electronic device (e.g., the electronic device 101 in FIG. 1, 2, 3, or 4) and information about a space in which the control action is to be performed.

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, the at least one processor (e.g., the processor 120 in FIG. 1 or 4) may be configured to identify a space in which the first external electronic device (the electronic device 102 in FIG. 1, or the first external electronic device 102 in FIG. 2, 3, or 5) is located based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be configured to select at least one second external electronic device (e.g., the second external electronic devices 210 in FIG. 2 or 3) located in the identified space as at least one target second external electronic device (e.g., the second external electronic devices 210 in FIG. 2 or 3) in which the control action is to be performed, if the identified space is identical to the space in which the control action is to be performed.

According to an embodiment of the disclosure, the at least one processor (e.g., the processor 120 in FIG. 1 or 4) may be configured to transmit a signal requesting to perform the control action to a third external electronic device (e.g., the server 108 in FIG. 1, or the third external electronic device 108 in FIG. 2, 3, or 5) via the communication module (e.g., the communication module 190 in FIG. 1 or 4).

According to an embodiment of the disclosure, the signal requesting to perform the control action may include information about the at least one target second external electronic device (e.g., the second external electronic devices 210 in FIG. 2 or 3).

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, the at least one processor (e.g., the processor 120 in FIG. 1 or 4) may be configured to identify a space in which the first external electronic device (the electronic device 102 in FIG. 1, or the first external electronic device 102 in FIG. 2, 3, or 5) is located based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be configured to transmit a signal requesting to perform the control action to a third external electronic device (e.g., the server 108 in FIG. 1, or the third external electronic device 108 in FIG. 2, 3, or 5) via the communication module (e.g., the communication module 190 in FIG. 1 or 4), if the identified space is identical to the space in which the control action is to be performed.

According to an embodiment of the disclosure, the signal requesting to perform the control action may include information about the at least one target second external electronic device (e.g., the second external electronic devices 210 in FIG. 2 or 3).

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, the at least one processor (e.g., the processor 120 in FIG. 1 or 4) may be configured to identify a space in which the first external electronic device (the electronic device 102 in FIG. 1, or the first external electronic device 102 in FIG. 2, 3, or 5) is located based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one processor (e.g., the processor 120 in FIG. 1 or 4) may be configured to refrain from performing the control action, if the identified space is not identical to the space in which the control action is to be performed.

According to an embodiment of the disclosure, the at least one processor (e.g., the processor 120 in FIG. 1 or 4) may be configured to obtain the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5), based on at least one of a Bluetooth low energy (BLE) scheme, a ultra wide band (UWB) scheme, or a global positioning system (GPS) scheme.

According to an embodiment of the disclosure, a third external electronic device (e.g., a server 108 in FIG. 1, or a third external electronic device 108 in FIG. 2, 3, or 5) may include a communication module (e.g., a communication module 511 in FIG. 5), and at least one processor (e.g., a processor 513 in FIG. 5) operatively connected with the communication module (e.g., the communication module 511 in FIG. 5).

According to an embodiment of the disclosure, the at least one processor (e.g., the processor 513 in FIG. 5) may be configured to receive, from an electronic device (e.g., an electronic device 101 in FIG. 1, 2, 3, or 4) via the communication module (e.g., the communication module 511 in FIG. 5), a signal requesting to perform a control action set for an input signal of a first external electronic device (an electronic device 102 in FIG. 1, or a first external electronic device 102 in FIG. 2, 3, or 5).

According to an embodiment of the disclosure, the at least one processor (e.g., the processor 513 in FIG. 5) may be further configured to transmit, via the communication module (e.g., the communication module 511 in FIG. 5), a signal requesting to perform the control action to at least one target second external electronic device (e.g., second external electronic devices 210 in FIG. 2 or 3) which corresponds to information about the at least one target second external electronic device (e.g., the second external electronic devices 210 in FIG. 2 or 3) in which the control action is to be performed among the at least one second external electronic device (e.g., the second external electronic devices 210 in FIG. 2 or 3) included in the received signal.

According to an embodiment of the disclosure, the at least one processor (e.g., the processor 513 in FIG. 5) may be configured to receive, from the electronic device (e.g., the electronic device 101 in FIG. 1, 2, 3, or 4) via the communication module (e.g., the communication module 511 in FIG. 5), a signal requesting to register, at the third external electronic device (e.g., the server 108 in FIG. 1, or the third external electronic device 108 in FIG. 2, 3, or 5), control configuration for controlling an operation of the at least one second external electronic device (e.g., the second external electronic devices 210 in FIG. 2 or 3) or the electronic device (e.g., the electronic device 101 in FIG. 1, 2, 3, or 4) which is set for each of input signals of the first external electronic device (the electronic device 102 in FIG. 1, or the first external electronic device 102 in FIG. 2, 3, or 5).

According to an embodiment of the disclosure, the at least one processor (e.g., the processor 513 in FIG. 5) may be configured to register the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for each of the input signals of the first external electronic device (the electronic device 102 in FIG. 1, or the first external electronic device 102 in FIG. 2, 3, or 5).

According to an embodiment of the disclosure, the control configuration may include the control action, or include the control action and information about a space in which the control action is to be performed.

According to an embodiment of the disclosure, the at least one target second external electronic device (e.g., the second external electronic devices 210 in FIG. 2 or 3) may be selected based on the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may be obtained, based on at least one of a Bluetooth low energy (BLE) scheme, a ultra wide band (UWB) scheme, or a global positioning system (GPS) scheme.

According to an embodiment of the disclosure, a third external electronic device (e.g., a server 108 in FIG. 1, or a third external electronic device 108 in FIG. 2, 3, or 5) may include a communication module (e.g., a communication module 511 in FIG. 5), and at least one processor (e.g., a processor 513 in FIG. 5) operatively connected with the communication module (e.g., the communication module 511 in FIG. 5).

According to an embodiment of the disclosure, the at least one processor (e.g., the processor 513 in FIG. 5) may be configured to receive, from an electronic device (e.g., an electronic device 101 in FIG. 1, 2, 3, or 4) via the communication module (e.g., the communication module 511 in FIG. 5), a signal requesting to perform a control action set for an input signal of a first external electronic device (an electronic device 102 in FIG. 1, or a first external electronic device 102 in FIG. 2, 3, or 5).

According to an embodiment of the disclosure, the at least one processor (e.g., the processor 513 in FIG. 5) may be further configured to perform the control action based on at least one of a location of the first external electronic device (the electronic device 102 in FIG. 1, or the first external electronic device 102 in FIG. 2, 3, or 5) or an orientation direction of the first external electronic device (the electronic device 102 in FIG. 1, or the first external electronic device 102 in FIG. 2, 3, or 5) included in the received signal.

According to an embodiment of the disclosure, the at least one processor (e.g., the processor 513 in FIG. 5) may be configured to select at least one target second external electronic device (e.g., the second external electronic devices in FIG. 2 or 3) in which the control action is to be performed among the at least one second external electronic device (e.g., the second external electronic devices in FIG. 2 or 3), based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) included in the received signal.

According to an embodiment of the disclosure, the at least one processor (e.g., the processor 513 in FIG. 5) may be configured to transmit a signal requesting to perform the control action to the at least one target second external electronic device (e.g., the second external electronic devices in FIG. 2 or 3) via the communication module (e.g., the communication module 511 in FIG. 5).

According to an embodiment of the disclosure, the at least one processor (e.g., the processor 513 in FIG. 5) may be configured to receive, from the electronic device (e.g., the electronic device 101 in FIG. 1, 2, 3, or 4) via the communication module (e.g., the communication module 511 in FIG. 5), a signal requesting to register, at the third external electronic device (e.g., the server 108 in FIG. 1, or the third external electronic device 108 in FIG. 2, 3, or 5), control configuration for controlling an operation of the at least one second external electronic device (e.g., the second external electronic devices 210 in FIG. 2 or 3) or the electronic device (e.g., the electronic device 101 in FIG. 1, 2, 3, or 4) which is set for each of input signals of the first external electronic device (the electronic device 102 in FIG. 1, or the first external electronic device 102 in FIG. 2, 3, or 5).

According to an embodiment of the disclosure, the at least one processor (e.g., the processor 513 in FIG. 5) may be configured to register the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for each of the input signals of the first external electronic device (the electronic device 102 in FIG. 1, or the first external electronic device 102 in FIG. 2, 3, or 5).

According to an embodiment of the disclosure, the control configuration may include the control action, or include the control action and information about a space in which the control action is to be performed.

According to an embodiment of the disclosure, the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may be obtained, based on at least one of a Bluetooth low energy (BLE) scheme, a ultra wide band (UWB) scheme, or a global positioning system (GPS) scheme.

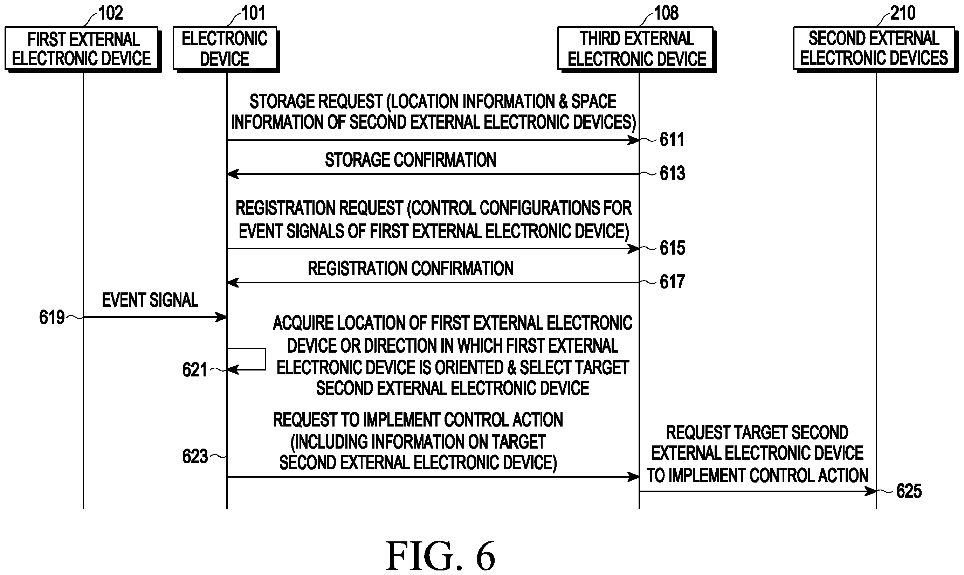

FIG. 6 is a diagram illustrating an example of a process for providing a location-based service in a wireless communication network according to an embodiment.

Referring to FIG. 6, a wireless communication network may include at least one of an electronic device 101, a first external electronic device 102, a plurality of second external electronic devices 210, or a third external electronic device 108.

According to an embodiment, the wireless communication network may be an IoT network. For example, the IoT network may be a smart home network. According to an embodiment, the location-based service may be an automation service for controlling operations (e.g., power on/off, volume up, volume down, and light on/off) of the plurality of second external electronic devices 210. According to an embodiment, the location-based service may be an automation service based on a location of the first external electronic device 102 or an orientation direction of the first external electronic device 102.

According to an embodiment, the electronic device 101 may be an electronic device 101 in FIG. 1, the first external electronic device 102 may be an electronic device 102 in FIG. 1, each of the plurality of second external electronic devices 210 may be an IoT device, and the third external electronic device 108 may be a server 108 in FIG. 1.

According to an embodiment, the first external electronic device 102 may be an electronic device which may control operations for the plurality of second external electronic devices 210 by interworking with the electronic device 101. According to an embodiment, the first external electronic device 102 may be a smart tag (e.g., a Samsung Galaxy smart tag), a smart button, or a wearable electronic device (e.g., a smart watch). According to an embodiment, each of the plurality of second external electronic devices 210 may be a home appliance such as a TV, a light, an air conditioner, an oven, or a speaker.

According to an embodiment, the third external electronic device 108 may be a server (e.g., an IoT server) or a hub. In an embodiment, the wireless communication network may further include other external electronic devices (e.g., a cloud server or an application market server).

According to an embodiment, a signal exchanged between the electronic device 101 and the first external electronic device 102, a signal exchanged between the electronic device 101 and each of the plurality of second external electronic devices 210, or a signal exchanged between the electronic device 101 and the third external electronic device 108 may be a BLE signal (e.g., a BLE protocol data unit (PDU)) based on a BLE scheme or a UWB signal (e.g., a UWB PDU) based on a UWB scheme.

In an embodiment, the electronic device 101 may obtain (or detect) a location of each of the electronic device 101, the first external electronic device 102, or the plurality of second external electronic devices 210 based on at least one of the BLE scheme, the UWB scheme, and a GPS scheme. In an embodiment, the electronic device 101 may obtain (or measure) a distance between the electronic device 101 and the first external electronic device 102 based on at least one of the BLE scheme or the UWB scheme. In an embodiment, the electronic device 101 may obtain (or detect) the orientation direction of the first external electronic device 102 based on the UWB scheme. In an embodiment, the wireless communication network may further include at least one fourth external electronic device (e.g., an anchor), and the electronic device 101 may obtain the location of the first external electronic device 102 and the orientation direction of the first external electronic device 102 based on a distance between the at least one fourth external electronic device and the first external electronic device 102 received from the at least one fourth external electronic device and information about the orientation direction of the first external electronic device 102.

First, when an application (e.g., a Samsung SmartThings application) for a location-based service (e.g., an automation service and a find service) is first executed in the electronic device 101, initial registration (or initial setting) for the first external electronic device 102 and the plurality of second external electronic devices 210 which will interwork with the electronic device 101 to provide the location-based service may start. In operation 611, the electronic device 101 may obtain a location of each of the second external electronic devices 210 and store location information indicating the location of each of the second external electronic devices 210. In an embodiment, the location of each of the second external electronic devices 210 may be inputted from a user via a UI of the electronic device 101, and each of the second external electronic devices 210 may be registered, by the user, at a corresponding space among a plurality of spaces (e.g., a living room, a family room, a kitchen, an entrance, and a laundry storage in a home space, and first to Nth offices, a kitchen, and an entrance in an office space) included in the wireless communication network.

In an embodiment, the space included in the wireless communication network does not necessarily include a plurality of spaces and may include only one space. The plurality of spaces included in the wireless communication network may be physically distinct spaces or logically distinct spaces. In operation 611, the electronic device 101 may transmit, to the third external electronic device 108, a signal requesting to store location information of each of the second external electronic devices 210 and space information indicating a space in which each of the second external electronic devices 210 is allocated.

In operation 611, a case has been described that each of the second external electronic devices 210 is registered by the user via the UI of the electronic device 101 at the corresponding space among the plurality of spaces included in the wireless communication network has been described, however, unlike this, the electronic device 101 may obtain the location information of each of the second external electronic devices 210 without intervention of the user, and register each of the second external electronic devices 210 at the corresponding space among the plurality of spaces included in the wireless communication network. For example, the location of each of the second external electronic devices 210 may be measured based on various schemes, and the various schemes used for measuring the location of each of the second external electronic devices 210 may include at least one of the BLE scheme, the UWB scheme, or the GPS scheme, and the various schemes used for measuring the location of each of the second external electronic devices 210 are not limited thereto. The electronic device 101 may allocate each of the second external electronic devices 210 to the corresponding space among the plurality of spaces included in the wireless communication network corresponding to the location information of each of the second external electronic devices 210.

The third external electronic device 108, which receives the signal requesting to store the location information and the space information of each of the second external electronic devices 210 from the electronic device 101, may store the location information and the space information of each of the second external electronic devices 210, and transmit a signal (e.g., a storage confirmation signal) indicating that the location information and the space information of each of the second external electronic devices 210 has been stored. According to an embodiment, after storing the location information and the space information of each of the second external electronic devices 210, the third external electronic device 108 may not transmit the storage confirmation signal indicating that the location information and the space information of each of the second external electronic devices 210 has been stored, and in this case, operation 613 may be omitted.

After the location information and the space information of each of the plurality of second external electronic devices 210 are stored, in operation 615, the electronic device 101 may set control configuration for each of event signals of the first external electronic device 102 to provide the automation service. In an embodiment, the event signals of the first external electronic device 102 may corresponding to key signals corresponding to a plurality of keys included in the first external electronic device 102, or key signals corresponding to a combination of at least two among the plurality of keys included in the first external electronic device 102, and the event signals of the first external electronic device 102 are not limited thereto. For example, in FIG. 6, it will be assumed that the event signals of the first external electronic device 102 include a click signal and a long press signal. In an embodiment, the click signal may be an event signal corresponding to clicking a button key of the first external electronic device 102 once, and the long press signal may be an event signal corresponding to clicking the button key of the first external electronic device 102 for more than set time.

An operation in which the electronic device 101 sets control configuration for each of the event signals of the first external electronic device 102 will be described in more detail as follows.

In an embodiment, when setting the control configuration for each of the event signals of the first external electronic device 102, the electronic device 101 may designate only a control action without designating device information about some or all of the plurality of the second external electronic devices 210, for each of the event signal of the first external electronic device 102. In an embodiment, the device information about each of the second external electronic devices 210 may include a device identifier (ID) of each of the second external electronic devices 210. In an embodiment, the control action may include an operation (e.g., power on/off, volume up, volume down, and light on/off) which needs to be performed by at least one of the plurality of second external electronic devices 210.

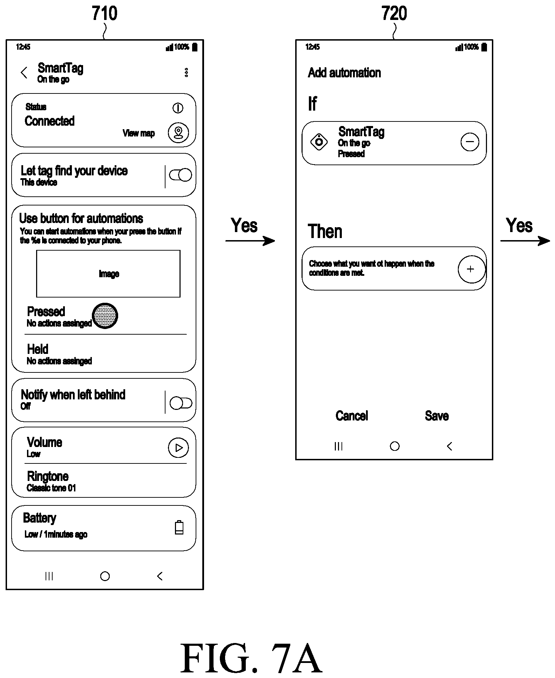

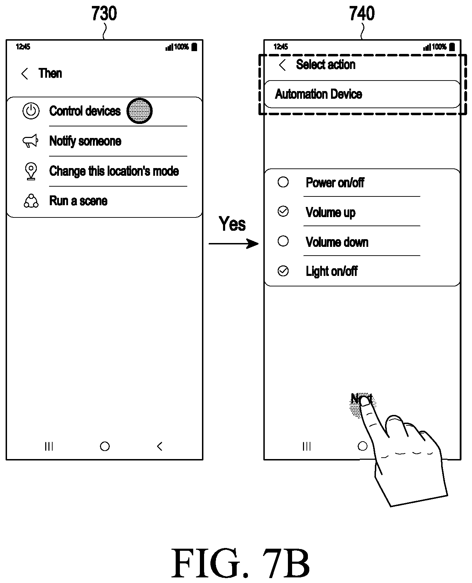

In this way, the operation of designating only the control action without designating the device information about some or all of the plurality of the second external electronic devices 210 for each of the event signals of the first external electronic device 102 when setting the control configuration for each of the event signals of the first external electronic device 102 will be described with reference to FIGS. 7a and 7b.

FIGS. 7a and 7b are diagrams illustrating an example of a screen in a case of setting control configuration for an event signal of a first external electronic device by designating a control action without designating device information about a second external electronic device according to an embodiment.

Referring to FIGS. 7a and 7b, an electronic device 101 may set control configuration for each of event signals (e.g., a click signal and a long press signal) of a first external electronic device 102, and a first screen 710 may be a screen in a case that one of the event signals of the first external electronic device 102 is selected in order for the electronic device 101 to set control configurations for the event signals of the first external electronic device 102. For example, the first screen 710 may be a screen in a case that an event signal whose control configuration for an automation service will be set is selected among the event signals of the first external electronic device 102 in an application (e.g., Samsung SmartThings) for executing a location-based service. In an embodiment, the first screen 710 may be a screen in a case that the event signal whose control configuration is to be set is the click signal. In the first screen 710, the click signal is shown as "Pressed."

In this way, as the click signal is selected as the event signal for which the electronic device 101 will set the control configuration via the first screen 710, a second screen 720 may be displayed. The second screen 720 may be a screen requesting to select a condition under which the control configuration to be set for the selected event signal will be executed as the event signal for which the control configuration is to be set is selected. The second screen 720 may be a screen requesting to select a condition under which the control configuration to be set for the click signal will be executed if the selected event signal is the click signal. For example, the second screen 720 may include a guidance message (e.g., "Choose what you want to happen when the conditions are met") requesting to select the condition under which the control configuration to be set for the click signal will be executed.

In this way, after the electronic device 101 is requested to select the condition under which the control configuration to be set for the event signal of the first external electronic device 102 will be executed via the second screen 720, a third screen 730 may be displayed. The third screen 730 may be a screen which displays conditions under which control configuration which may be set for the selected event signal of the first external electronic device 102 will be executed. In an embodiment, the conditions under which control configuration which may be set for the selected event signal of the first external electronic device 102 will be executed may include a condition under which an operation of some or all of the plurality of second external electronic devices 210 may be controlled. For example, the condition under which the operation of some or all of the plurality of second external electronic devices 210 may be controlled is displayed on the third screen 730, such as "Control devices." The conditions under which the control configuration which may be set for the selected event signal of the first external electronic device 102 will be executed may be implemented in various forms, and in an embodiment of the disclosure, the condition under which the operation of some or all of the plurality of second external electronic devices 210 may be controlled is selected among the conditions under which the control configuration which may be set for the selected event signal of the first external electronic device 102 will be executed may be considered. Conditions other than "Control devices" such as "Notify someone", "Change this location's mode", and "Run a scene" are shown in the third screen 730, and a description of the remaining conditions other than "Control devices" will be omitted.

After the condition under which the control configuration which may be set for the selected event signal of the first external electronic device 102 will be executed is selected, a fourth screen 740 may be displayed. The fourth screen 740 may be a screen which designates control configuration for a selected condition. In an embodiment, the control configuration for the selected condition may include a control action. In an embodiment, the control action may include an operation to be performed by at least one of the plurality of second external electronic devices 210. For example, the control actions may include various operations such as power on/off, volume up, volume down, and light on/off. The fourth screen 740 may be a screen which displays a case that the control action included in the control configuration for the selected condition is designated as the volume up and the light on/off. As shown in the fourth screen 740, in an embodiment of the disclosure, the control configuration set for the event signal of the first external electronic device 102 may not include the device information about some or all of the plurality of second external electronic devices 210 and may include only information about the control action to be performed by some or all of the plurality of second external electronic devices 210.

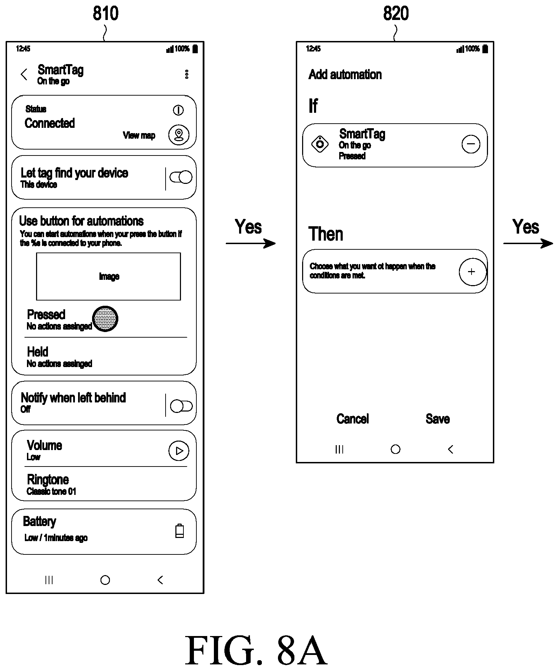

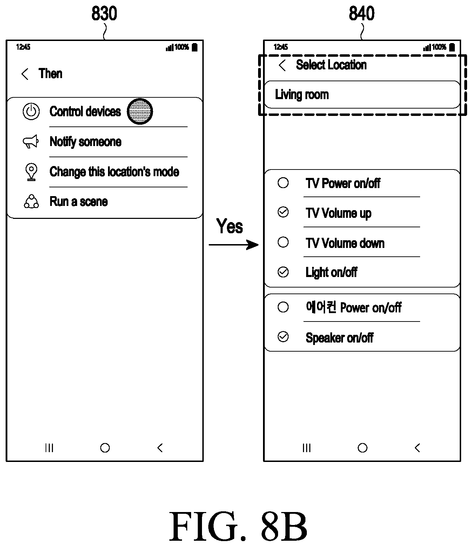

Referring back to FIG. 6, in operation 615, when setting the control configuration for each of the event signals of the first external electronic device 102, the electronic device 101 may designate location information and the control action without designating the device information about some or all of the plurality of second external electronic devices 210, for each of the event signals of the first external electronic device 102 instead of designating only the control action without designating the device information about some or all of the plurality of second external electronic devices 210, for each of the event signals of the first external electronic device 102 as described in FIGS. 7a and 7b. In this way, when setting the control configuration for each of the event signals of the first external electronic device 102, an operation of designating only the location information and the control action without designating the device information about some or all of the plurality of second external electronic devices 210, for each of the event signals of the first external electronic device 102 will be described with reference to FIGS. 8a and 8b.

FIGS. 8a and 8b are diagrams illustrating an example of a screen in a case of setting control configuration for an event signal of a first external electronic device by designating location information and a control action without designating device information about a second external electronic device according to an embodiment.

Referring to FIGS. 8a and 8b, a first screen 810, a second screen 820, and a third screen 830 may be implemented similarly to a first screen 710, a second screen 720, and a third screen 730 described in FIGS. 7a and 7b, so a detailed description of the first screen 810, the second screen 820, and the third screen 830 will be omitted.

After a condition under which control configuration which may be set for an event signal of a first external electronic device 102 will be executed is selected, via the third screen 830, is selected as "Control devices" under which an operation of some or all of a plurality of second external electronic devices 210 may be controlled, a fourth screen 840 may be displayed. The fourth screen 840 may be a screen for designating control configuration for a selected condition. In an embodiment, the control configuration for the selected condition may include location information and a control action.

In an embodiment, the location information may include information about at least one space of a plurality of spaces (e.g., a living room, a family room, a kitchen, an entrance, and a laundry storage in a home space, and first to Nth offices, a kitchen, and an entrance in an office space) included in a wireless communication network (e.g., a smart home network). In an embodiment, a space included in the wireless communication network does not necessarily include a plurality of spaces and may include only one space. The plurality of spaces included in the wireless communication network may be physically distinct spaces or logically distinct spaces. The fourth screen 840 may be a screen in a case that the location information included in the control configuration is designated as "Living room" which is information indicating the living room.

In an embodiment, the control action may include an operation to be performed by at least one of the plurality of second external electronic devices 210. For example, the control actions may include various operations such as TV power on/off, TV volume up, TV volume down, light on/off, air conditioner power on/off, and speaker on/off. The fourth screen 840 may be a screen which displays a case that the control action included in the control configuration for the selected condition is designated as the TV volume up, the light on/off, and the speaker on/off. As shown in the fourth screen 840, in an embodiment of the disclosure, the control configuration set for the event signal of the first external electronic device 102 may not include the device information about some or all of the plurality of second external electronic devices 210 and may include location information and information about the control action to be performed by some or all of the plurality of second external electronic devices 210.

Referring back to FIG. 6, after setting the control configuration for each of the event signals of the first external electronic device 102, the electronic device 101 may transmit a signal requesting to register the control configurations set for the event signals of the first external electronic device 102 to the third external electronic device 108 in operation 615. The signal transmitted by the electronic device 101 to the third external electronic device 108 in operation 615 may include information about the control configurations set for the event signals of the first external electronic device 102. In an embodiment, the information about the control configurations set for the event signals of the first external electronic device 102 may include an event signal of the first external electronic device 102 for which corresponding control configuration is set and the corresponding control configuration.

The third external electronic device 108, which receives the signal requesting to register the control configurations set for the event signals of the first external electronic device 102 from the electronic device 101, may register the control configurations set for the event signals of the first external electronic device 102 received from the electronic device 101, and transmit a signal (e.g., a registration confirmation signal) indicating that the control configurations set for the event signals of the first external electronic device 102 have been registered to the electronic device 101 in operation 617. According to an embodiment, after registering the control configurations set for the event signals of the first external electronic device 102 received from the electronic device 101, the third external electronic device 108 may not separately transmit the registration confirmation signal indicating that the control configurations set for the event signals of the first external electronic device 102 have been registered, and in this case, operation 615 may be omitted.

Thereafter, the first external electronic device 102 may detect that an event signal occurs and transmit the event signal to the electronic device 101 in operation 619. In an embodiment, if any one of key signals corresponding to a plurality of keys included in the first external electronic device 102, or key signals corresponding to a combination of at least two of the plurality of keys included in the first external electronic device 102 is detected, the first external electronic device 102 may detect that an event signal corresponding to the detected key signal occurs. In FIG. 6, it will be assumed that the event signal detected by the first external electronic device 102 is a click signal.

The electronic device 101, which receives the event signal from the first external electronic device 102, may obtain a location of the first external electronic device 102 or an orientation direction of the first external electronic device 102 in operation 621. In an embodiment, the electronic device 101 may obtain the location of the first external electronic device 102 based on at least one of a BLE scheme, a UWB scheme, or a GPS scheme. In an embodiment, the electronic device 101 may obtain the orientation direction of the first external electronic device 102 based on the UWB scheme. In an embodiment, the electronic device 101 may obtain the location of the first external electronic device 102 and the orientation direction of the first external electronic device 102 based on a distance between at least one fourth external electronic device (e.g., an anchor) and the first external electronic device 102 received from the at least one fourth external electronic device and information about the orientation direction of the first external electronic device 102.

In operation 621, the electronic device 101 may select at least one second external electronic device whose operation is controlled by the event signal of the external electronic device 102 among the plurality of second external electronic devices 210 based on the location of the first external electronic device 102 or the orientation direction of the first external electronic device 102. In an embodiment, the electronic device 101 may select at least one second external electronic device which will perform a control action included in the control configuration set for the event signal of the external electronic device 102 among the plurality of second external electronic devices 210 based on the location of the first external electronic device 102 or the orientation direction of the first external electronic device 102. Hereinafter, for convenience of a description, the second external electronic device which will perform the control action included in the control configuration set for the event signal of the first external electronic device 102 will be referred to as a "target second external electronic device." The electronic device 101 may select the target second external electronic device based on the location of the first external electronic device 102 and the orientation direction of the first external electronic device 102 among the plurality of second external electronic devices 210.

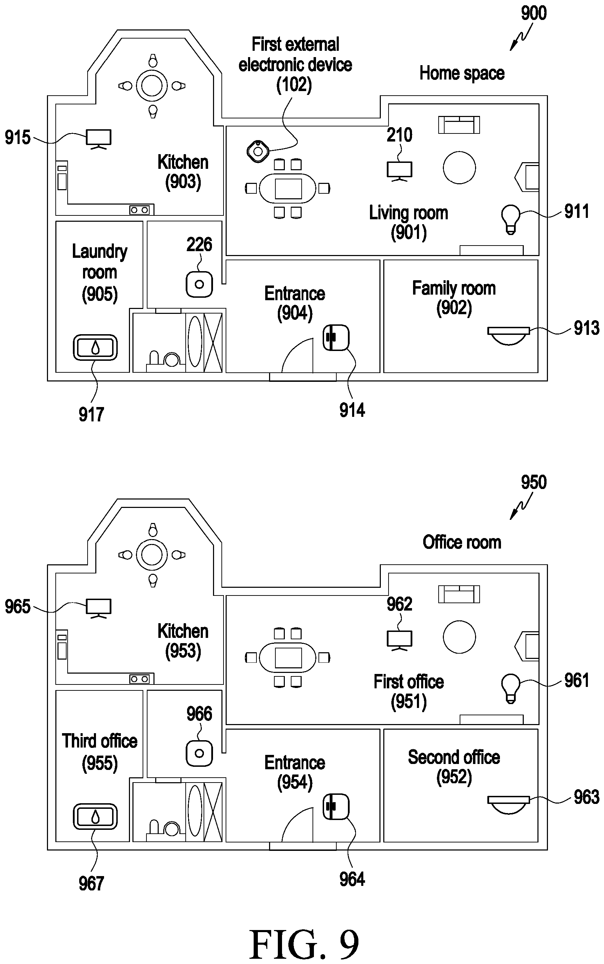

An operation of the electronic device 101 selecting the target second external electronic device among the second external electronic devices 210 will be described with reference to FIGS. 9, 10, and 11.

FIG. 9 is a diagram illustrating an example of an operation of selecting a target second external electronic device among second external electronic devices according to an embodiment.

Before describing FIG. 9, it will be assumed that an event signal received by an electronic device 101 from a first external electronic device 102 is a click signal, and control configuration set for the click signal does not include device information for some or all of a plurality of second external electronic devices and includes only a control action. For example, in FIG. 9, it will be assumed that the control configuration set for the click signal received from the first external electronic device 102 includes only the control action such as volume up and light on/off as shown in a fourth screen 740 in FIG. 7b.

The operation of selecting the target second external electronic device among the plurality of second external electronic devices 210 illustrated in FIG. 9 may be an operation of selecting the target second external electronic device based on a location of the first external electronic device 102.

As illustrated in FIG. 9, a wireless communication network (e.g., a smart home network) includes a plurality of spaces. The plurality of spaces may include spaces with the same GPS location and spaces with different GPS locations. In FIG. 9, it will be assumed that a GPS location of a home space 900 and a GPS location of an office space 950 are different.

In an embodiment, GPS locations of a plurality of spaces (e.g., a living room 901, a family room 902, a kitchen 903, an entrance 904, and a laundry room 905) included in the home space 900 are the same, but spatial locations may be different. In an embodiment, if a space with the same GPS location is divided with a plurality of spaces, a spatial location may indicate a location of each of the divided spaces. For example, GPS locations of the living room 901, the family room 902, the kitchen 903, the entrance 904, and the laundry room 905 included in the home space 900 are the same, but spatial locations of the living room 901, the family room 902, the kitchen 903, the entrance 904, and the laundry room 905 may be different.

In an embodiment, GPS locations of a plurality of spaces (e.g., a first office 951, a second office 952, a kitchen 953, an entrance 954, and a third office 955) included in the office space 950 may be the same, and spatial locations of the first office 951, the second office 952, the kitchen 953, the entrance 954, and the third office 955 may be different.

In an embodiment, a plurality of second external electronic devices (e.g., second external electronic devices 210 in FIG. 2 or FIG. 3) 911, 912, 913, 914, 915, 916, and 917 may exist in the home space 900. The plurality of second external electronic devices 911, 912, 913, 914, 915, 916, and 917 may be IoT devices, and as illustrated in FIG. 9, at least one IoT device may be placed in each of the living room 901, the family room 902, the kitchen 903, the entrance 904, and the laundry room 905 included in the home space 900. For example, a light 911 and a TV 912 may be placed in the living room 901, a light 913 may be placed in the family room 902, a TV 915 may be placed in the kitchen 903, a door sensor 914 and a motion sensor 916 may be placed in the entrance 904, and a moisture sensor 917 may be placed in the laundry room 905.

In an embodiment, a plurality of second external electronic devices (e.g., the second external electronic devices 210 in FIG. 2 or 3) 961, 962, 963, 964, 965, 966, and 967 may exist in the office space 950. The plurality of second external electronic devices 961, 962, 963, 964, 965, 966, and 967 may be IoT devices, and as illustrated in FIG. 9, at least one IoT device may be placed in each of the first office 951, the second office 952, the kitchen 953, the entrance 954, and the third office 955 included in the office space 950. For example, a light 961 and a TV 962 may be placed in the first office 951, a light 963 may be placed in the second office 952, a TV 965 may be placed in the kitchen 953, a door sensor 964 and a motion sensor 966 may be placed in the entrance 954, and a motion sensor 967 may be placed in the third office 955.

In an embodiment, when receiving a click signal, which is an event signal, from the first external electronic device 102, the electronic device 101 may obtain a location of the first external electronic device 102 based on at least one of a BLE scheme, a UWB scheme, and/or a GPS scheme. In an embodiment, the electronic device 101 may obtain the location of the first external electronic device 102 based on information about a distance between at least one fourth external electronic device (e.g., an anchor) and the first external electronic device 102, which is received from the at least one fourth external electronic device. In an embodiment, if there are spaces with different GPS locations among the plurality of spaces included in the wireless communication network, the electronic device 101 may obtain a GPS location of the first external electronic device 102 based on the GPS scheme. The electronic device 101 may identify a space corresponding to the GPS location of the first external electronic device 102. As illustrated in FIG. 9, the first external electronic device 102 is located in the home space 900, so the electronic device 101 may identify the GPS location of the first external electronic device 102 as the home space 900 based on the GPS scheme. In an embodiment, if a space (e.g., the home space 900) corresponding to the GPS location of the first external electronic device 102 includes a plurality of spaces, a location of the first external electronic device 102 within the home space 900 may be obtained based on the BLE scheme and/or the UWB scheme, or the location of the first external electronic device 102 within the home space 900 may be obtained based on information about a distance between the at least one fourth external electronic device and the first external electronic device 102 which is received from the at least one fourth external electronic device. The electronic device 101 may identify a space in which the first external electronic device 102 exists among the plurality of spaces within the home space 900 of the first external electronic device 102 corresponding to the location of the first external electronic device 102 based on the BLE scheme and/or the UWB scheme or based on the information about the distance between the at least one fourth external electronic device and the first external electronic device 102 which is received from the at least one fourth external electronic device. In FIG. 9, the first external electronic device 102 exists in the living room 901 within the home space 900, so the electronic device 101 may select second external electronic devices existing in the living room 901 as target second external electronic devices. In FIG. 9, the light 911 and the TV 912 are placed in the living room 901, so the electronic device 101 may select the light 911 and the TV 912 as target second external electronic devices.

In FIG. 9, a case that the space corresponding to the GPS location includes the plurality of spaces with the different spatial locations has been described as an example of a case that the electronic device 101 selects the target second external electronic device among the plurality of second external electronic devices 210, however, if the space corresponding to the GPS location does not include the plurality of spaces with the different spatial locations, the electronic device 101 may select all of second external electronic devices 210 included in the space corresponding to the corresponding GPS location as the target second external electronic device. For example, if the home space 900 does not include a plurality of spaces divided corresponding to spatial locations and the second external electronic devices 911, 912, 913, 914, 915, and 916 exist in the home space 900, all of the second external electronic devices 911, 912, 913, 914, 915, 916, and 917 may be selected as the target second external electronic device.

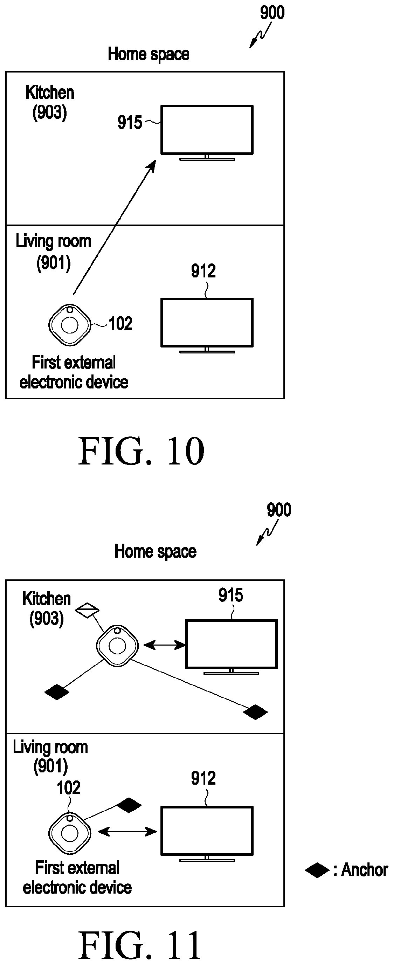

FIG. 10 is a diagram illustrating another example of an operation of selecting a target second external electronic device among second external electronic devices based on a location of a first external electronic device according to an embodiment.

Before describing FIG. 10, it will be assumed that an event signal received by an electronic device 101 from a first external electronic device 102 is a click signal, and control configuration set for the click signal does not include device information for some or all of a plurality of second external electronic devices and includes only a control action. For example, in FIG. 10, it will be assumed that the control configuration set for the click signal received from the first external electronic device 102 includes only the control action such as volume up and light on/off as shown in a fourth screen 740 in FIG. 7b.

The operation of selecting the target second external electronic device among the plurality of second external electronic devices 210 illustrated in FIG. 10 may be an operation of selecting the target second external electronic device based on a location of the first external electronic device 102 and an orientation direction of the first external electronic device 102.

In an embodiment, spaces in a wireless communication network (e.g., a smart home network) and second external electronic devices 210 placed in each space which are considered in FIG. 10 may be implemented similarly to spaces in a wireless communication network and second external electronic devices 210 placed in each space which have been described in FIG. 9, so a detailed description thereof will be omitted.

In an embodiment, when receiving a click signal, which is an event signal, from the first external electronic device 102, the electronic device 101 may obtain a location of the first external electronic device 102 based on at least one of a BLE scheme, a UWB scheme, and/or a GPS scheme. In an embodiment, if there are spaces with different GPS locations among the plurality of spaces included in the wireless communication network, the electronic device 101 may obtain a GPS location of the first external electronic device 102 based on the GPS scheme. The electronic device 101 may identify a space corresponding to the GPS location of the first external electronic device 102, and if the space corresponding to the GPS location of the first external electronic device 102 includes a plurality of spaces, the electronic device 101 may obtain an orientation direction of the first external electronic device 102 based on the BLE scheme and/or the UWB scheme. In an embodiment, the electronic device 101 may obtain an orientation direction of the first external electronic device 102 based on information about the orientation direction of the first external electronic device 102 received from at least one fourth external electronic device (e.g., an anchor).

The electronic device 101 may select a target second external electronic device in which a control action set for an event signal received from the first external electronic device 102 will be performed corresponding to the orientation direction of the first external electronic device 102 obtained based on the BLE scheme and/or the UWB scheme or based on the information about the orientation direction of the first external electronic device 102 received from the fourth external electronic device. For example, the spaces in the wireless communication network and the second external electronic devices 210 placed in each space considered in FIG. 10 are implemented similarly to the spaces in the wireless communication network and the second external electronic devices 210 placed in each space described in FIG. 9, so the first external electronic device 102 exists in a living room 901 in a home space 900, but the orientation direction of the first external electronic device 102 is a kitchen 903 in the home space 900, so the electronic device 101 may determine second external electronic devices existing in the kitchen 903 as a target second external electronic device. In FIG. 9, a TV 915 is placed in the kitchen 903, the electronic device 101 may determine the TV 915 as a target second external electronic device.

In FIG. 10, a case that the space corresponding to the GPS location includes the plurality of spaces with the different spatial locations has been described as an example of a case that the electronic device 101 selects the target second external electronic device among the plurality of second external electronic devices 210, however, if the space corresponding to the GPS location does not include the plurality of spaces with the different spatial locations, the electronic device 101 may also select the target second external electronic device among second external electronic devices 210 included in the space corresponding to the corresponding GPS location corresponding to the orientation direction of the first external electronic device 102. For example, if the home space 900 does not include a plurality of spaces divided corresponding to spatial locations and second external electronic devices 911, 912, 913, 914, 915, and 916 exist in the home space 900, the TV 915 may be selected as the target second external electronic device among the second external electronic devices 911, 912, 913, 914, 915, 916, and 917 corresponding to the orientation direction of the first external electronic device 102.

FIG. 11 is a diagram illustrating still another example of an operation of selecting a target second external electronic device among second external electronic devices based on a location of a first external electronic device according to an embodiment.

Before describing FIG. 11, it will be assumed that an event signal received by an electronic device 101 from a first external electronic device 102 is a click signal, and control configuration set for the click signal does not include device information for some or all of a plurality of second external electronic devices and includes only a control action. For example, in FIG. 11, it will be assumed that the control configuration set for the click signal received from the first external electronic device 102 includes only the control action such as volume up and light on/off as shown in a fourth screen 740 in FIG. 7b.

The operation of selecting the target second external electronic device among the plurality of second external electronic devices 210 illustrated in FIG. 11 may be an operation of selecting the target second external electronic device based on a location of the first external electronic device 102 and an orientation direction of the first external electronic device 102.

In an embodiment, spaces in a wireless communication network (e.g., a smart home network) and second external electronic devices 210 placed in each space which are considered in FIG. 11 may be implemented similarly to spaces in a wireless communication network and second external electronic devices 210 placed in each space which have been described in FIG. 9, so a detailed description thereof will be omitted.

In an embodiment, when receiving a click signal, which is an event signal, from the first external electronic device 102, the electronic device 101 may obtain a location of the first external electronic device 102 based on at least one of a BLE scheme, a UWB scheme, and/or a GPS scheme. In an embodiment, if there are spaces with different GPS locations among the plurality of spaces included in the wireless communication network, the electronic device 101 may obtain a GPS location of the first external electronic device 102 based on the GPS scheme. The electronic device 101 may identify a space corresponding to the GPS location of the first external electronic device 102, and if the space corresponding to the GPS location of the first external electronic device 102 includes a plurality of spaces, the electronic device 101 may select a target second external electronic device in which a control action corresponding to an event signal received from the first external electronic device 102 will be performed based on a distance between at least one anchor placed in each of the plurality of spaces and the first external electronic device 102 and an orientation direction of the first external electronic device 102. In an embodiment, the distance between the at least one anchor placed in each of the plurality of spaces and the first external electronic device 102 and the orientation direction of the first external electronic device 102 may be detected based on a BLE scheme and/or a UWB scheme. In an embodiment, the electronic device 101 may obtain, from the at least one anchor placed in each of the plurality of spaces, information about the distance between the at least one anchor and the first external electronic device 102 and the orientation direction of the first external electronic device 102.

The electronic device 101 may select a target second external electronic device in which a control action set for an event signal received from the first external electronic device 102 will be performed based on the information about the distance between the at least one anchor and the first external electronic device 102 and the orientation direction of the first external electronic device 102 which is obtained from the at least one anchor placed in each of the plurality of spaces. For example, the spaces in the wireless communication network and the second external electronic devices 210 placed in each space considered in FIG. 11 are implemented similarly to the spaces in the wireless communication network and the second external electronic devices 210 placed in each space described in FIG. 9, so if the first external electronic device 102 exists in a living room 901 in a home space 900, the electronic device 101 may select any one (e.g., a TV 912) of second external electronic devices (e.g., a light 911 and the TV 912) existing in the living room 901 as the target second external electronic device based on the orientation direction of the first external electronic device 102. For another example, if the first external electronic device 102 exists in a kitchen 903 in the home space 900, the electronic device 101 may select a second external electronic device (e.g., a TV 11115) existing in the kitchen 903 as the target second external electronic device.

In FIG. 11, a case that the space corresponding to the GPS location includes the plurality of spaces with the different spatial locations has been described as an example of a case that the electronic device 101 selects the target second external electronic device among the plurality of second external electronic devices 210, however, if the space corresponding to the GPS location does not include the plurality of spaces with the different spatial locations, the electronic device 101 may select the target second external electronic device in which the control action corresponding to the event signal received from the first external electronic device 102 corresponding to a distance between the first external electronic device 102 and at least one anchor placed in the corresponding space and an orientation direction of the first external electronic device 102 which are obtained from the at least one anchor. For example, if the home space 900 does not include a plurality of spaces divided corresponding to spatial locations and second external electronic devices 911, 912, 913, 914, 915, and 916 exist in the home space 900, the TV 912 or the TV 915 may be selected as the target second external electronic device among the second external electronic devices 911, 912, 913, 914, 915, 916, and 917 corresponding to the distance between the first external electronic device 102 and at least one anchor and the orientation direction of the first external electronic device 102.

Referring back to FIG. 6, in operation 621, the electronic device 101 may select a target second external electronic device based on the location of the first external electronic device 102 detected based on the at least one of the BLE scheme, the UWB scheme, and/or the GPS scheme. In an embodiment, the electronic device 101 may select the target second external electronic device based on the location of the first external electronic device 102 detected based on the at least one of the BLE scheme, the UWB scheme, and/or the GPS scheme and the orientation direction of the first external electronic device 102. In an embodiment, the electronic device 101 may select the target second external electronic device based on the information about the distance between the fourth external electronic device and the first external electronic device 102 and the orientation direction of the first external electronic device 102 which is received from the fourth external electronic device.

The electronic device 101, which selects the target second external electronic device, may transmit, to the third external electronic device 108, a signal requesting to perform the control action set for the event signal received from the first external electronic device 102 in operation 623. In an embodiment, the signal requesting to perform the control action set for the event signal received from the first external electronic device 102 may include information about the target second external electronic device, selected by the electronic device 101, which is a second external electronic device in which the corresponding control action will be performed.

The third external electronic device 108, which receives, from the electronic device 101, the signal requesting to perform the control action set for the event signal received from the first external electronic device 102, may transmit, to the target second external electronic device, a signal requesting to perform the control action set for the event signal received from the first external electronic device 102 based on the information about the target second external electronic device in operation 625. The target second external electronic device, which receives, from the third external electronic device 108, the signal requesting to perform the control action set for the event signal received from the first external electronic device 102 may perform the corresponding control action. For example, as described in FIG. 9, if the event signal received from the first external electronic device 102 is a click signal, and control configuration set for the click signal includes only a control action such as volume up and light on/off as shown in a fourth screen 740 in FIG. 7b, the electronic device 101 may obtain a location of the first external electronic device 102, and determine the target second external electronic device among the second external electronic devices 210 based on the obtained location of the first external electronic device 102. In FIG. 9, the first external electronic device 102 is located in a living room 901, and the electronic device 101 may determine a light 911 and a TV 912 located in the living room 901 among the second external electronic devices 210 as the target second external electronic device. The electronic device 101 may transmit, to the third external electronic device 108, a signal including information about the light 911 and the TV 912 and requesting to perform a control action set for the click signal received from the first external electronic device 102. The third external electronic device 108, which receives, from the electronic device 101, the signal including the information about the light 911 and the TV 912 and requesting to perform the control action set for the click signal received from the first external electronic device 102, may transmit a signal requesting to perform the control action (e.g., volume up and light on/off) set for the click signal to the light 911 and the TV 912. The light 911 and TV 912, which receive the signal requesting to perform the control action set for the click signal from the third external electronic device 108, may perform a light on/off operation and a volume up operation, respectively.

For another example, as described in FIG. 10, if the event signal received from the first external electronic device 102 is a click signal, and control configuration set for the click signal includes only a control action such as volume up and light on/off as shown in a fourth screen 740 in FIG. 7b, the electronic device 101 may obtain a location of the first external electronic device 102 and an orientation direction of the first external electronic device 102, and determine the target second external electronic device among the second external electronic devices 210 based on the obtained location of the first external electronic device 102 and the obtained orientation direction of the first external electronic device 102. In FIG. 10, even though the first external electronic device 102 is located in a living room 901, the orientation direction of the first external electronic device 102 is a kitchen 903, not the living room 901, so the electronic device 101 may determine a TV 915 existing in the kitchen 903 among the second external electronic devices 210 as the target second external electronic device. The electronic device 101 may transmit, to the third external electronic device 108, a signal including information about the TV 915 and requesting to perform a control action set for the click signal received from the first external electronic device 102. The third external electronic device 108, which receives, from the electronic device 101, the signal including the information about the TV 915 and requesting to perform the control action set for the click signal received from the first external electronic device 102, may transmit a signal requesting to perform the control action (e.g., volume up and light on/off) set for the click signal to the TV 915. The TV 915, which receives the signal requesting to perform the control action set for the click signal from the third external electronic device 108, may perform a volume up operation.

For still another example, as described in FIG. 11, if the event signal received from the first external electronic device 102 is a click signal, and control configuration set for the click signal includes only a control action such as volume up and light on/off as shown in a fourth screen 740 in FIG. 7b, the electronic device 101 may obtain a location of the first external electronic device 102 and an orientation direction of the first external electronic device 102, and determine the target second external electronic device among the second external electronic devices 210 based on the obtained location of the first external electronic device 102 and the obtained orientation direction of the first external electronic device 102. In FIG. 11, if the first external electronic device 102 is located in a living room 901, a TV 912 among a light 911 and the TV 912 located in the living room 901 may be determined as the target second external electronic device. In this case, the electronic device 101 may transmit, to the third external electronic device 108, a signal including information about the TV 912 and requesting to perform a control action set for the click signal received from the first external electronic device 102. The third external electronic device 108, which receives, from the electronic device 101, the signal including the information about the TV 912 and requesting to perform the control action set for the click signal received from the first external electronic device 102, may transmit a signal requesting to perform the control action (e.g., volume up and light on/off) set for the click signal to the TV 912. The TV 912, which receives the signal requesting to perform the control action set for the click signal from the third external electronic device 108, may perform a volume up operation. In FIG. 11, if the first external electronic device 102 is located in the kitchen 903, the TV 915 located in the kitchen 903 may be determined as the target second external electronic device based on the orientation direction of the first external electronic device 102. In this case, the electronic device 101 may transmit, to the third external electronic device 108, a signal including information about the TV 915 and requesting to perform a control action set for the click signal received from the first external electronic device 102. The third external electronic device 108, which receives, from the electronic device 101, the signal including the information about the TV 915 and requesting to perform the control action set for the click signal received from the first external electronic device 102, may transmit a signal requesting to perform the control action (e.g., volume up and light on/off) set for the click signal to the TV 915. The TV 915, which receives the signal requesting to perform the control action set for the click signal from the third external electronic device 108, may perform a volume up operation.

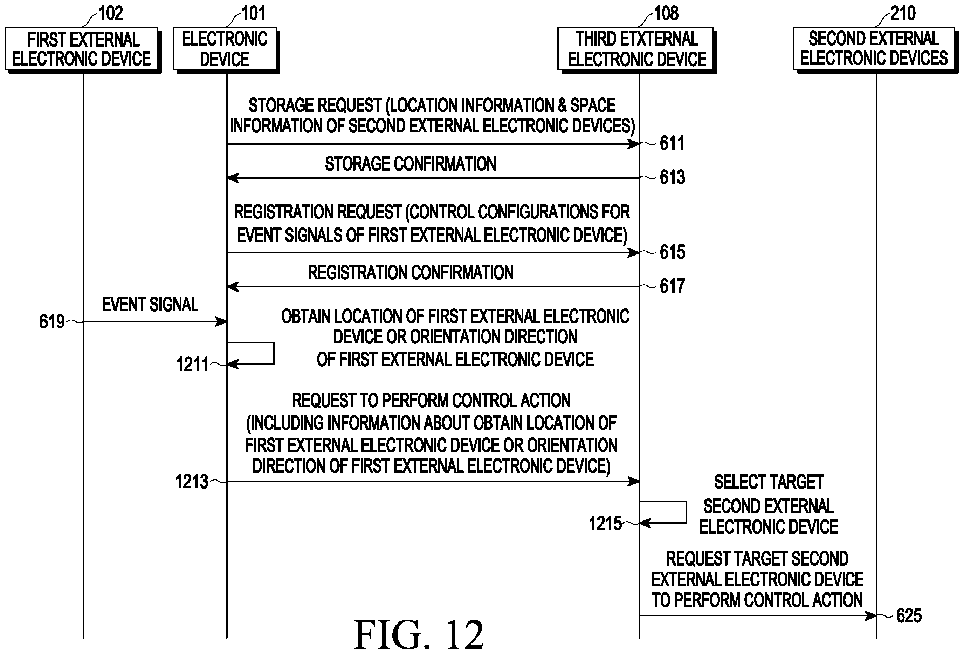

FIG. 12 is a diagram illustrating another example of a process for providing a location-based service in a wireless communication network according to an embodiment.

Referring to FIG. 12, a wireless communication network may include at least one of an electronic device 101, a first external electronic device 102, a plurality of second external electronic devices 210, or a third external electronic device 108.

According to an embodiment, the wireless communication network may be an IoT network. For example, the IoT network may be a smart home network. According to an embodiment, the location-based service may be an automation service for controlling operations (e.g., power on/off, volume up, volume down, and light on/off) of the plurality of second external electronic devices 210. According to an embodiment, the location-based service may be an automation service based on a location of the first external electronic device 102 or an orientation direction of the first external electronic device 102.

According to an embodiment, the electronic device 101 may be an electronic device 101 in FIG. 1, the first external electronic device 102 may be an electronic device 102 in FIG. 1, each of the plurality of second external electronic devices 210 may be an IoT device, and the third external electronic device 108 may be a server 108 in FIG. 1.

According to an embodiment, the first external electronic device 102 may be an electronic device which may control operations for the plurality of second external electronic devices 210 by interworking with the electronic device 101. According to an embodiment, the first external electronic device 102 may be a smart tag (e.g., a Samsung Galaxy smart tag), a smart button, or a wearable electronic device (e.g., a smart watch). According to an embodiment, each of the plurality of second external electronic devices 210 may be a home appliance such as a TV, a light, an air conditioner, an oven, or a speaker.

According to an embodiment, the third external electronic device 108 may be a server (e.g., an IoT server) or a hub. In an embodiment, the wireless communication network may further include other external electronic devices (e.g., a cloud server or an application market server).

According to an embodiment, a signal exchanged between the electronic device 101 and the first external electronic device 102, a signal exchanged between the electronic device 101 and each of the plurality of second external electronic devices 210, or a signal exchanged between the electronic device 101 and the third external electronic device 108 may be a BLE signal (e.g., a BLE PDU) based on a BLE scheme or a UWB signal (e.g., a UWB PDU) based on a UWB scheme.

In an embodiment, the electronic device 101 may obtain (or detect) a location of each of the electronic device 101, the first external electronic device 102, or the plurality of second external electronic devices 210 based on at least one of the BLE scheme, the UWB scheme, and a GPS scheme. In an embodiment, the electronic device 101 may obtain (or measure) a distance between the electronic device 101 and the first external electronic device 102 based on at least one of the BLE scheme or the UWB scheme. In an embodiment, the electronic device 101 may obtain (or detect) the orientation direction of the first external electronic device 102 based on the UWB scheme. In an embodiment, the wireless communication network may further include at least one fourth external electronic device (e.g., an anchor), and the electronic device 101 may obtain the location of the first external electronic device 102 and the orientation direction of the first external electronic device 102 based on a distance between the at least one fourth external electronic device and the first external electronic device 102 received from the at least one fourth external electronic device and information about the orientation direction of the first external electronic device 102.

Operations 611 to 619 in FIG. 12 are the same as operations 611 to 619 described in FIG. 6, so a detailed description thereof will be omitted.

The electronic device 101, which receives an event signal from the first external electronic device 102, may obtain a location of the first external electronic device 102 or an orientation direction of the first external electronic device 102 in operation 1211. In an embodiment, the electronic device 101 may detect the location of the first external electronic device 102 based on at least one of a BLE scheme, a UWB scheme, or a GPS scheme. In an embodiment, the electronic device 101 may obtain the orientation direction of the first external electronic device 102 based on the UWB scheme. In an embodiment, the electronic device 101 may obtain the location of the first external electronic device 102 or the orientation direction of the first external electronic device 102 based on information about a distance between at least one fourth external electronic device (e.g., an anchor) and the first external electronic device 102 and the orientation direction of the first external electronic device 102 which is received from the at least one fourth external electronic device.

The electronic device 101, which obtains the location of the first external electronic device 102 and the orientation direction of the first external electronic device 102, may transmit a signal requesting to perform a control action set for an event signal received from the first external electronic device 102 to the third external electronic device 108 in operation 1213. In an embodiment, the signal requesting to perform the control action set for the event signal received from the first external electronic device 102 may include information about the location of the first external electronic device 102 and the orientation direction of the first external electronic device 102.

The third external electronic device 108, which receives, from the electronic device 101, the signal requesting to perform the control action set for the event signal received from the first external electronic device 102, may select a target second external electronic device among the plurality of second external electronic devices 210 based on at least one of the location of the electronic device 102 or the orientation direction of the first external electronic device 102 in operation 1215. An operation of the third external electronic device 108 selecting the target second external electronic device from among the plurality of second external electronic devices 210 may be implemented similarly to an operation (e.g., operation 621) of selecting a target second external electronic device among a plurality of second external electronic devices 210 in operation 621 in FIG. 6, so a detailed description thereof will be omitted.

The third external electronic device 108, which selects the target second external electronic device, may transmit, to the target second external electronic device, a signal requesting to perform the control action set for the event signal received from the first external electronic device 102 in operation 625. The target second external electronic device, which receives, from third external electronic device 108, the signal requesting to perform the control action set for the event signal received from the first external electronic device 102, may perform the corresponding control action. Operation 625 in FIG. 12 is the same as operation 625 described in FIG. 6, so a detailed description thereof will be omitted.

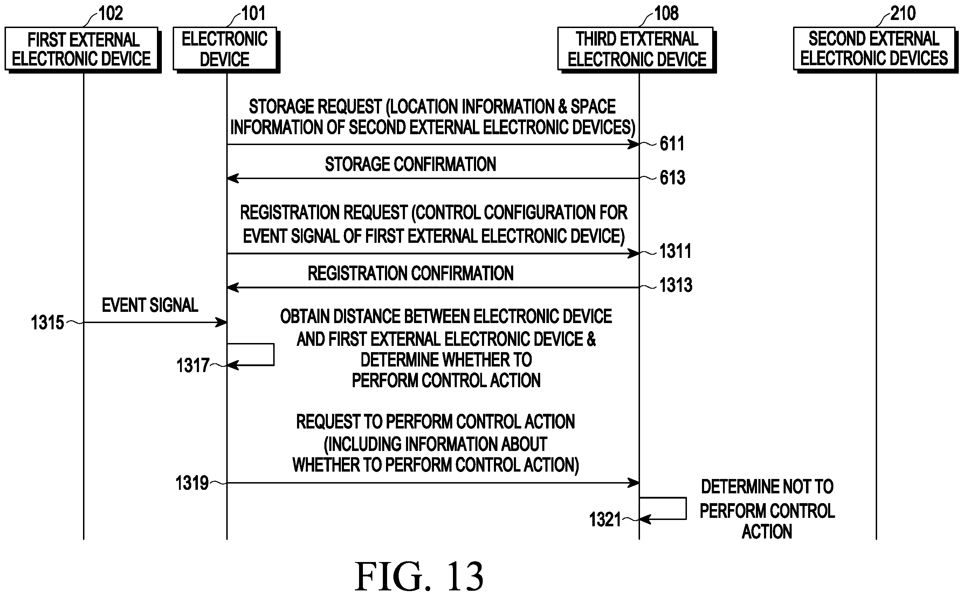

FIG. 13 is a diagram illustrating still another example of a process for providing a location-based service in a wireless communication network according to an embodiment.

Referring to FIG. 13, a wireless communication network may include at least one of an electronic device 101, a first external electronic device 102, a plurality of second external electronic devices 210, or a third external electronic device 108.

According to an embodiment, the wireless communication network may be an IoT network. For example, the IoT network may be a smart home network. According to an embodiment, the location-based service may be a find service which generates a ring indicating a location of the electronic device 101. According to an embodiment, the location-based service may be a find service which is based on a distance between the electronic device 101 and the first external electronic device 102.

According to an embodiment, the electronic device 101 may be an electronic device 101 in FIG. 1, the first external electronic device 102 may be an electronic device 102 in FIG. 1, each of the plurality of second external electronic devices 210 may be an IoT device, and the third external electronic device 108 may be a server 108 in FIG. 1.

According to an embodiment, the first external electronic device 102 may be an electronic device which may control operations for the plurality of second external electronic devices 210 by interworking with the electronic device 101. According to an embodiment, the first external electronic device 102 may be a smart tag (e.g., a Samsung Galaxy smart tag), a smart button, or a wearable electronic device (e.g., a smart watch). According to an embodiment, each of the plurality of second external electronic devices 210 may be a home appliance such as a TV, a light, an air conditioner, an oven, or a speaker.

According to an embodiment, the third external electronic device 108 may be a server (e.g., an IoT server) or a hub. In an embodiment, the wireless communication network may further include other external electronic devices (e.g., a cloud server or an application market server).

According to an embodiment, a signal exchanged between the electronic device 101 and the first external electronic device 102, a signal exchanged between the electronic device 101 and each of the plurality of second external electronic devices 210, or a signal exchanged between the electronic device 101 and the third external electronic device 108 may be a BLE signal (e.g., a BLE PDU) based on a BLE scheme or a UWB signal (e.g., a UWB PDU) based on a UWB scheme.

In an embodiment, the electronic device 101 may obtain (or detect) a location of each of the electronic device 101, the first external electronic device 102, or the plurality of second external electronic devices 210 based on at least one of the BLE scheme, the UWB scheme, and a GPS scheme. In an embodiment, the electronic device 101 may obtain (or measure) a distance between the electronic device 101 and the first external electronic device 102 based on at least one of the BLE scheme or the UWB scheme. In an embodiment, the wireless communication network may further include at least one fourth external electronic device (e.g., an anchor), and the electronic device 101 may obtain a distance between the electronic device 101 and the first external electronic device 102 based on a distance between the at least one fourth external electronic device and the first external electronic device 102 which is received from the at least one fourth external electronic device.

First, when an application (e.g., a Samsung SmartThings application) for a location-based service (e.g., an automation service and a find service) is first executed in the electronic device 101, initial installation (or initial setting) for the first external electronic device 102 and the plurality of second external electronic devices 210 which will interwork with the electronic device 101 to provide the location-based service may start. Operations 611 and 613 in FIG. 13 are the same as operations 611 and 613 described in FIG. 6, so a detailed description thereof will be omitted.

After the location information and the space information of each of the plurality of second external electronic devices 210 are stored, in operation 1311, the electronic device 101 may set control configuration for an event signal of the first external electronic device 102 to provide the find service. In an embodiment, the event signals of the first external electronic device 102 may corresponding to key signals corresponding to a plurality of keys included in the first external electronic device 102, or key signals corresponding to a combination of at least two among the plurality of keys included in the first external electronic device 102, and the event signals of the first external electronic device 102 are not limited thereto. For example, in FIG. 13, it will be assumed that the event signal of the first external electronic device 102 includes a double click signal. In an embodiment, the double click signal may be an event signal corresponding to clicking a button key of the first external electronic device 102 twice.

An operation in which the electronic device 101 sets control configuration for the event signal of the first external electronic device 102 will be described in more detail as follows.

In an embodiment, when setting the control configuration for the event signal of the first external electronic device 102, the electronic device 101 may designate device information for the electronic device 101 and a control action for the event signal of the first external electronic device 102. In an embodiment, the device information about the electronic device 101 may include a device ID of the electronic device 101. In an embodiment, the control action may include an operation (e.g., ring generation) to be performed by the electronic device 101.

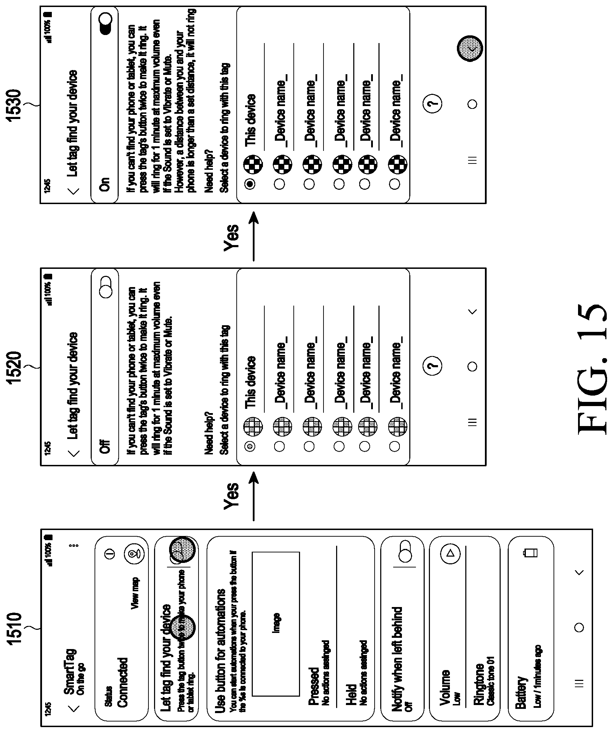

In this way, the operation of designating the device information about the electronic device 101 and the control action for the event signal of the first external electronic device 102 when setting the control configuration for the event signal of the first external electronic device 102 will be described with reference to FIG. 15.

FIG. 15 is a diagram illustrating an example of a screen in a case of setting control configuration for an event signal of a first external electronic device by designating device information about an electronic device and a control action according to an embodiment.

Referring to FIG. 15, an electronic device 101 may set control configuration for an event signal (e.g., a double click signal) of a first external electronic device 102, and a first screen 1510 may be a screen for setting the control configuration for the event signal of the first external electronic device 102. For example, the first screen 1510 may be a screen in a case that an event signal whose control configuration for a find service will be set is selected in an application (e.g., Samsung SmartThings) for executing a location-based service. In an embodiment, the first screen 1510 may be a screen in a case that the event signal whose control configuration will be set is the double click signal, and the control action set for the double click signal indicates ring generation. For example, on the first screen 1510, a case that the ring generation is set for the double click signal is displayed as "Press the tag button twice to make your phone or tablet ring."

In this way, if the electronic device 101 intends to set the control configuration for the find service to the double click signal of the first external electronic device 102 via the first screen 1510, a second screen 1520 may be displayed. The second screen 1520 may be a screen requesting to select device information of an electronic device (e.g., the electronic device 101) to be set for the event signal for the find service. Device information of electronic devices which may set for the double click signal for the find service may be displayed on the second screen 1520. For example, on the second screen 1520, the device information of the electronic device 101 is shown as "This device."

After the device information of the electronic devices which may be set to the double click signal for the find service is displayed via the second screen 1520, if device information of an electronic device to be set to the double click signal for the find service is selected as the device information of the electronic device 101, a third screen 1530 may be displayed. As displayed on the third screen 1530, ring generation in the electronic device 101 may be set for the control action for the double click signal. According to an embodiment of the disclosure, the ring generation in the electronic device 101 set for the double click signal may be set to be performed only if a distance between the electronic device 101 and the first external electronic device 102 is less than or equal to a threshold distance. For example, a message (e.g., "However, a distance between you and your phone is longer than a set distance, it will not ring.") indicating that the electronic device 101 will not generate a ring may be displayed on the third screen 1530 if the distance between the electronic device 101 and the first external electronic device 102 is greater than the threshold distance.

Referring back to FIG. 13, after setting the control configuration for the event signal of the first external electronic device 102, the electronic device 101 may transmit a signal requesting to register the control configuration set for the event signal of the first external electronic device 102 to the third external electronic device 108 in operation 1311. The signal transmitted by the electronic device 101 to the third external electronic device 108 in operation 1311 may include information about the control configuration set for the event signal of the first external electronic device 102. In an embodiment, the information about the control configuration set for the event signal of the first external electronic device 102 may include an event signal of the first external electronic device 102 for which corresponding control configuration is set, the corresponding control configuration, and device information of the electronic device 101.

The third external electronic device 108, which receives the signal requesting to register the control configuration set for the event signal of the first external electronic device 102 from the electronic device 101, may register the control configuration set for the event signal of the first external electronic device 102 received from the electronic device 101, and transmit a signal (e.g., a registration confirmation signal) indicating that the control configuration set for the event signal of the first external electronic device 102 has been registered to the electronic device 101 in operation 1313.

Thereafter, the first external electronic device 102 may detect that an event signal occurs and transmit the event signal to the electronic device 101 in operation 1315. In an embodiment, if any one of key signals corresponding to a plurality of keys included in the first external electronic device 102, or key signals corresponding to a combination of at least two of the plurality of keys included in the first external electronic device 102 is detected, the first external electronic device 102 may detect that an event signal corresponding to the detected key signal occurs. In FIG. 13, it will be assumed that the event signal detected by the first external electronic device 102 is a double click signal.

The electronic device 101, which receives the event signal from the first external electronic device 102, may obtain a distance between the electronic device 101 and the first external electronic device 102 in operation 1317. In an embodiment, the electronic device 101 may obtain the distance between the electronic device 101 and the first external electronic device 102 based on at least one of a BLE scheme, a UWB scheme, or a GPS scheme. In an embodiment, the electronic device 101 may obtain the distance between the electronic device 101 and the first external electronic device 102 based on a distance between at least one fourth external electronic device (e.g., an anchor) and the first external electronic device 102 received from the at least one fourth external electronic device.

The electronic device 101 may determine whether to perform the control action (e.g., ring generation) set for the double click signal based on the distance between the electronic device 101 and the first external electronic device 102 in operation 1317. In an embodiment, the electronic device 101 may determine whether the distance between the electronic device 101 and the first external electronic device 102 is less than or equal to the threshold distance, and determine not to perform the ring generation in the electronic device 101 set to the double click signal if the distance between the electronic device 101 and the first external electronic device 102 is not greater than the threshold distance.

In operation 1319, the electronic device 101 may transmit, to the third external electronic device 108, a signal requesting to perform the control action set for the event signal received from the first external electronic device 102. In an embodiment, the signal requesting to perform the control action set for the event signal received from the first external electronic device 102 may include device information for the electronic device 101 in which the corresponding control action will be performed and information about whether to perform the control action of the electronic device 101. In an embodiment, the information about whether to perform the control action of the electronic device 101 may be information indicating that the electronic device 101 will not perform the control action.

The third external electronic device 108, which receives, from the electronic device 101, the signal requesting to perform the control action set for the event signal received from the first external electronic device 102, may determine not to perform the control action set for the event signal received from the first external electronic device 102 based on the information about whether to perform the control action of the electronic device 101 in operation 1321. In this way, as the third external electronic device 108 determines not to perform the control action set for the event signal received from the first external electronic device 102, the third external electronic device 108 may not perform any further operation.

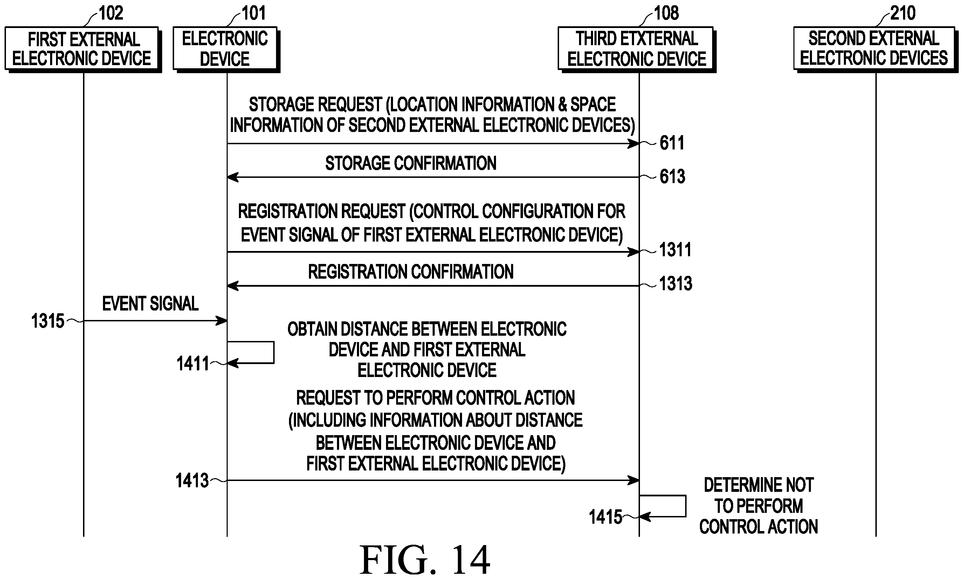

FIG. 14 is a diagram illustrating still another example of a process for providing a location-based service in a wireless communication network according to an embodiment.

Referring to FIG. 14, a wireless communication network may include at least one of an electronic device 101, a first external electronic device 102, a plurality of second external electronic devices 210, or a third external electronic device 108.

According to an embodiment, the wireless communication network may be an IoT network. For example, the IoT network may be a smart home network. According to an embodiment, the location-based service may be a find service which generates a ring indicating a location of the electronic device 101. According to an embodiment, the location-based service may be a find service which is based on a distance between the electronic device 101 and the first external electronic device 102.

According to an embodiment, the electronic device 101 may be an electronic device 101 in FIG. 1, the first external electronic device 102 may be an electronic device 102 in FIG. 1, each of the plurality of second external electronic devices 210 may be an IoT device, and the third external electronic device 108 may be a server 108 in FIG. 1.

According to an embodiment, the first external electronic device 102 may be an electronic device which may control operations for the plurality of second external electronic devices 210 by interworking with the electronic device 101. According to an embodiment, the first external electronic device 102 may be a smart tag (e.g., a Samsung Galaxy smart tag), a smart button, or a wearable electronic device (e.g., a smart watch). According to an embodiment, each of the plurality of second external electronic devices 210 may be a home appliance such as a TV, a light, an air conditioner, an oven, or a speaker.

According to an embodiment, the third external electronic device 108 may be a server (e.g., an IoT server or a hub). In an embodiment, the wireless communication network may further include other external electronic devices (e.g., a cloud server or an application market server).

According to an embodiment, a signal exchanged between the electronic device 101 and the first external electronic device 102, a signal exchanged between the electronic device 101 and each of the plurality of second external electronic devices 210, or a signal exchanged between the electronic device 101 and the third external electronic device 108 may be a BLE signal (e.g., a BLE PDU) based on a BLE scheme or a UWB signal (e.g., a UWB PDU) based on a UWB scheme.

In an embodiment, the electronic device 101 may obtain (or detect) a location of each of the electronic device 101, the first external electronic device 102, or the plurality of second external electronic devices 210 based on at least one of the BLE scheme, the UWB scheme, and a GPS scheme. In an embodiment, the electronic device 101 may obtain (or measure) a distance between the electronic device 101 and the first external electronic device 102 based on at least one of the BLE scheme or the UWB scheme. In an embodiment, the wireless communication network may further include at least one fourth external electronic device (e.g., an anchor), and the electronic device 101 may obtain a distance between the electronic device 101 and the first external electronic device 102 based on a distance between the at least one fourth external electronic device and the first external electronic device 102 which is received from the at least one fourth external electronic device.

First, when an application (e.g., a Samsung SmartThings application) for a location-based service (e.g., an automation service and a find service) is first executed in the electronic device 101, initial installation (or initial setting) for the first external electronic device 102 and the plurality of second external electronic devices 210 which will interwork with the electronic device 101 to provide the location-based service may start. Operations 611 and 613 in FIG. 14 are the same as operations 611 and 613 described in FIG. 6, so a detailed description thereof will be omitted. Operations 1311 and 1315 in FIG. 14 are the same as operations 1311 and 1315 described in FIG. 13, so a detailed description thereof will be omitted.

The electronic device 101, which receives the event signal from the first external electronic device 102, may obtain a distance between the electronic device 101 and the first external electronic device 102 in operation 1411. In an embodiment, the electronic device 101 may obtain a distance between the electronic device 101 and the first external electronic device 102 based on at least one of a BLE scheme, a UWB scheme, or a GPS scheme. In an embodiment, the electronic device 101 may obtain a distance between the electronic device 101 and the first external electronic device 102 based on information about a distance between at least one fourth external electronic device (e.g., an anchor) and the first external electronic device 102 which is received from the at least one fourth external electronic device.

In operation 1413, the electronic device 101, which obtains the distance between the electronic device 101 and the first external electronic device 102, may transmit, to the third external electronic device 108, a signal requesting to perform the control action set for the event signal received from the first external electronic device 102. In an embodiment, the signal requesting to perform the control action set for the event signal received from the first external electronic device 102 may include device information for the electronic device 101 in which the corresponding control action will be performed and information about the distance between the electronic device 101 and the first external electronic device 102.

The third external electronic device 108, which receives, from the electronic device 101, the signal requesting to perform the control action set for the event signal received from the first external electronic device 102, may determine whether to perform a control action (e.g., ring generation) set for a double click signal based on the distance between the electronic device 101 and the first external electronic device 102 in operation 1415. In an embodiment, the third external electronic device 108 may determine whether the distance between the electronic device 101 and the first external electronic device 102 is less than or equal to a threshold distance, and determine not to perform the ring generation in the electronic device 101 set for the double click signal if the distance between the electronic device 101 and the first external electronic device 102 is greater than the threshold distance. In this way, as the third external electronic device 108 determines not to perform the control action set for the event signal received from the first external electronic device 102, the third external electronic device 108 may not perform any further operation.

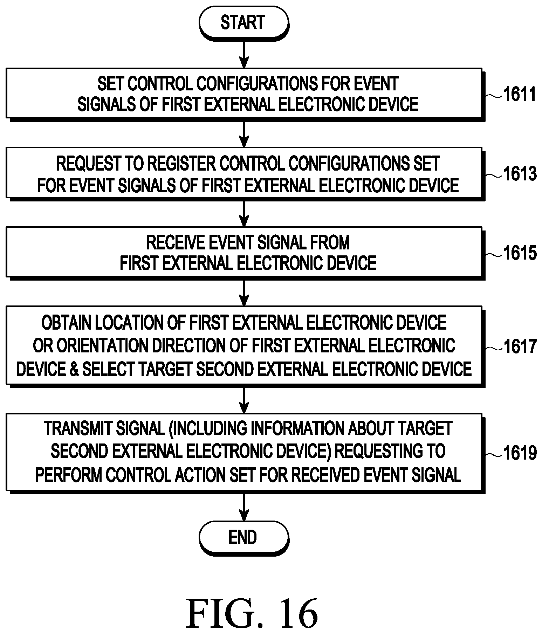

FIG. 16 is a diagram illustrating an example of an operating process of an electronic device according to an embodiment.

An operating process of an electronic device 101 (e.g., an electronic device 101 in FIG. 1, 2, 3, or 4) illustrated in FIG. 16 may be an operating process according to a process which provides a location-based service (e.g., an automation service) described in FIG. 6.

Referring to FIG. 16, in operation 1611, a processor (e.g., a processor 120 in FIG. 1 or 4) of the electronic device 101 may set control configurations for event signals of a first external electronic device 102 (an electronic device 102 in FIG. 1, or a first external electronic device 102 in FIG. 2, 3, or 5). An operation of the processor 120 setting the control configurations for the event signals of the first external electronic device 101 may be implemented similarly to operation 615 in FIG. 6, so a detailed description will be omitted.

After setting the control configuration for each of the event signals of the first external electronic device 102, the processor 120 may transmit, to a third external electronic device 108 (e.g., a server 108 in FIG. 1, or a third external electronic device 108 in FIG. 2, 3, or 5), a signal requesting to register the control configurations set for the event signals of the first external electronic device 102 via a communication module 190 (e.g., a communication module 190 in FIG. 1 or 4) in operation 1613. The signal requesting to register the control configurations set for the event signals of the first external electronic device 102 may include information about the control configurations set for the event signals of the first external electronic device 102. In an embodiment, the information about the control configurations set for the event signals of the first external electronic device 102 may include an event signal of the first external electronic device 102 for which corresponding control configuration is set and the corresponding control configuration. The operation of the processor 120 transmitting the signal requesting to register the control configurations set for the event signals of the first external electronic device 102 to the third external electronic device 108 via the communication module 190 may be implemented similarly to operation 615 in FIG. 6, so a detailed description thereof will be omitted. In an embodiment, the third external electronic device 108, which receives the signal requesting to register the control configurations set for the event signals of the first external electronic device 102 from the electronic device 101, may register the control configurations set for the event signals of the first external electronic device 102 received from the electronic device 101, and if necessary, transmit a signal (e.g., a registration confirmation signal) indicating that the control configurations set for the event signals of the first external electronic device 102 have been registered to the electronic device 101. Although not separately illustrated in FIG. 16, if the third external electronic device 108 transmits the registration confirmation signal to the electronic device 101, the processor 120 may receive a registration confirmation signal from the third external electronic device 108 via the communication module 190.

In operation 1615, the processor 120 may receive an event signal (e.g., a click signal) from the first external electronic device 102 via the communication module 190.

The processor 120 may obtain a location of the first external electronic device 102 or an orientation direction of the first external electronic device 102, and select a target second external electronic device which will perform a control action set for the received event signal of the first external electronic device 102 among a plurality of second external electronic devices 210 (e.g., second external electronic devices 210 in FIG. 2 or 3) based on the obtained location of the first external electronic device 102 or the obtained orientation direction of the first external electronic device 102 in operation 1617. In an embodiment, the processor 120 may obtain the location of the first external electronic device 102 based on at least one of a BLE scheme, a UWB scheme, or a GPS scheme. In an embodiment, the processor 120 may obtain the orientation direction of the first external electronic device 102 based on the UWB scheme. In an embodiment, the processor 120 may obtain the location of the first external electronic device 102 and the orientation direction of the first external electronic device 102 based on a distance between at least one fourth external electronic device (e.g., an anchor) and the first external electronic device 102 received from the at least one fourth external electronic device and information about the orientation direction of the first external electronic device 102. The operation of the processor 120 to select the target second external electronic device based on the obtained location of the first external electronic device 102 or the obtained orientation direction of the first external electronic device 102 be implemented similarly to operation 621 in FIG. 6, so a detailed description thereof will be omitted.

The processor 120, which selects the target second external electronic device, may transmit, to the third external electronic device 108 via the communication module 190, a signal requesting to perform the control action set for the event signal received from the first external electronic device 102 in operation 1619. In an embodiment, the signal requesting to perform the control action set for the event signal received from the first external electronic device 102 may include information about the target second external electronic device, selected by the processor 120, which is a second external electronic device in which the corresponding control action will be performed.

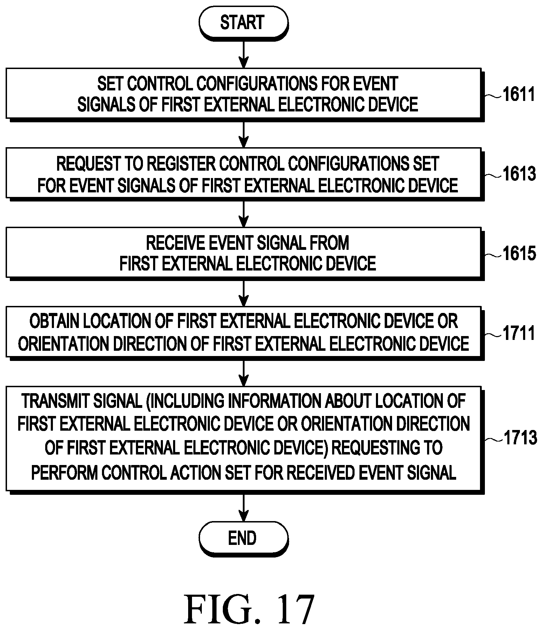

FIG. 17 is a diagram illustrating another example of an operating process of an electronic device according to an embodiment.

An operating process of an electronic device 101 (e.g., an electronic device 101 in FIG. 1, 2, 3, or 4) illustrated in FIG. 17 may be an operating process according to a process which provides a location-based service (e.g., an automation service) described in FIG. 12. Operations 1611 to 1615 in FIG. 17 may be the same as operations 1611 to 1615 in FIG. 16, so a detailed description thereof will be omitted.

Referring to FIG. 17, when an event signal (e.g., a double click signal) is received from a first external electronic device 102 (an electronic device 102 in FIG. 1, or a first external electronic device 102 in FIG. 2, 3, or 5) via a communication module 190 (e.g., a communication module 190 in FIG. 1 or 4), in operation 1711, a processor 120 (e.g., a processor 120 in FIG. 1 or 4) of the electronic device 101 may obtain a location of the first external electronic device 102 or an orientation direction of the first external electronic device 102 in operation 1211. In an embodiment, the processor 120 may obtain the location of the first external electronic device 102 based on at least one of a BLE scheme, a UWB scheme, or a GPS scheme. In an embodiment, the processor 120 may obtain the orientation direction of the first external electronic device 102 based on the UWB scheme. In an embodiment, the processor 120 may obtain the location of the first external electronic device 102 or the orientation direction of the first external electronic device 102 based on information about a distance between at least one fourth external electronic device (e.g., an anchor) and the first external electronic device 102 and the orientation direction of the first external electronic device 102 which is received from the at least one fourth external electronic device.

The processor 120, which obtains the location of the first external electronic device 102 or the orientation direction of the first external electronic device 102, may transmit, via the communication module 190, a signal requesting to perform a control action set for an event signal received from the first external electronic device 102 to a third external electronic device 108 (e.g., a server 108 in FIG. 1 or a third external electronic device 108 in FIG. 2, 3, or 5) in operation 1713. In an embodiment, the signal requesting to perform the control action set for the event signal received from the first external electronic device 102 may include information indicating the location of the first external electronic device 102 or the orientation direction of the first external electronic device 102.

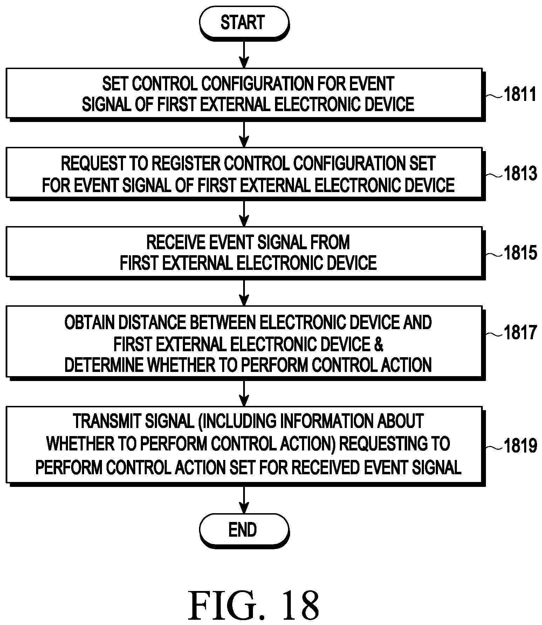

FIG. 18 is a diagram illustrating still another example of an operating process of an electronic device according to an embodiment.

An operating process of an electronic device 101 (e.g., an electronic device 101 in FIG. 1, 2, 3, or 4) illustrated in FIG. 18 may be an operating process according to a process which provides a location-based service (e.g., a find service) described in FIG. 13.

Referring to FIG. 18, in operation 1811, a processor 120 (e.g., a processor 120 in FIG. 1 or 4) of the electronic device 101 may set control configuration for an event signal of a first external electronic device 102 (an electronic device 102 in FIG. 1, or a first external electronic device 102 in FIG. 2, 3, or 5) in operation 1811. An operation of the processor 120 setting the control configuration for the event signal of the first external electronic device 101 may be implemented similarly to operation 1311 in FIG. 13, so a detailed description thereof will be omitted.

After setting the control configuration for the event signal of the first external electronic device 102, the processor 120 may transmit, via a communication module 190 (e.g., a communication module 190 in FIG. 1 or 4), a signal requesting to register the control configuration set for the event signal of the first external electronic device 102 to a third external electronic device 108 (e.g., a server 108 in FIG. 1 or a third external electronic device 108 in FIG. 2, 3, or 5) in operation 1813. The signal requesting to register the control configuration set for the event signal of the first external electronic device 102 may include device information of the electronic device 101 and information about the control configuration set for the event signal of the first external electronic device 102. In an embodiment, the information about the control configuration set for the event signal of the first external electronic device 102 may include an event signal of the first external electronic device 102 for which corresponding control configuration is set, and the corresponding control configuration. An operation of the processor 120 transmitting the signal requesting to register the control configuration set for the event signal of the first external electronic device 102 to the third external electronic device 108 via the communication module 190 may be implemented similarly to operation 1311 in 13, so a detailed description thereof will be omitted. In an embodiment, the third external electronic device 108, which receives the signal requesting to register the control configuration set for the event signal of the first external electronic device 102 from the electronic device 101, may register the control configuration set for the event signal of the first external electronic device 102 received from the electronic device 101, and if necessary, transmit a signal (e.g., a registration confirmation signal) indicating that the control configuration set for the event signal of the first external electronic device 102 has been registered to the electronic device 101. Although not separately illustrated in FIG. 18, if the third external electronic device 108 transmits the registration confirmation signal to the electronic device 101, the processor 120 may receive the registration confirmation signal from the third external electronic device 108 via the communication module 190.

In operation 1815, the processor 120 may receive an event signal (e.g., a double click signal) from the first external electronic device 102 via the communication module 190.

In operation 1817, the processor 120 may obtain a distance between the electronic device 101 and the first external electronic device 102 and determine whether to perform a control action (e.g. ring generation) for the event signal based on the obtained distance between the electronic device 101 and the first external electronic device 102. In an embodiment, the processor 120 may obtain the distance between the electronic device 101 and the first external electronic device 102 based on at least one of a BLE scheme, a UWB scheme, or a GPS scheme. In an embodiment, the processor 120 may obtain the distance between the electronic device 101 and the first external electronic device 102 based on a distance between at least one fourth external electronic device (e.g., an anchor) and the first external electronic device 102 received from the at least one fourth external electronic device. In an embodiment, the processor 120 may determine whether the distance between the electronic device 101 and the first external electronic device 102 is less than or equal to the threshold distance, and determine not to perform the ring generation in the electronic device 101 set to the double click signal if the distance between the electronic device 101 and the first external electronic device 102 is not greater than the threshold distance. An operation of the processor 120 to determine whether to perform the control action set for the event signal based on the obtained distance between the electronic device 101 and the first external electronic device 102 be implemented similarly to operation 1317 in FIG. 13, so a detailed description thereof will be omitted.

The processor 120, which determines whether to perform the control action set for the event signal based on the distance between the electronic device 101 and the first external electronic device 102, may transmit, to the third external electronic device 108 via the communication module 190, a signal requesting to perform the control action set for the event signal received from the first external electronic device 102 in operation 1819. In an embodiment, the signal requesting to perform the control action set for the event signal received from the first external electronic device 102 may include device information about the electronic device 101 in which the corresponding control action will be performed and information about whether the device 101 performs the control action. In an embodiment, the information about whether the electronic device 101 performs the control action may be information indicating that the electronic device 101 will not perform the control action.

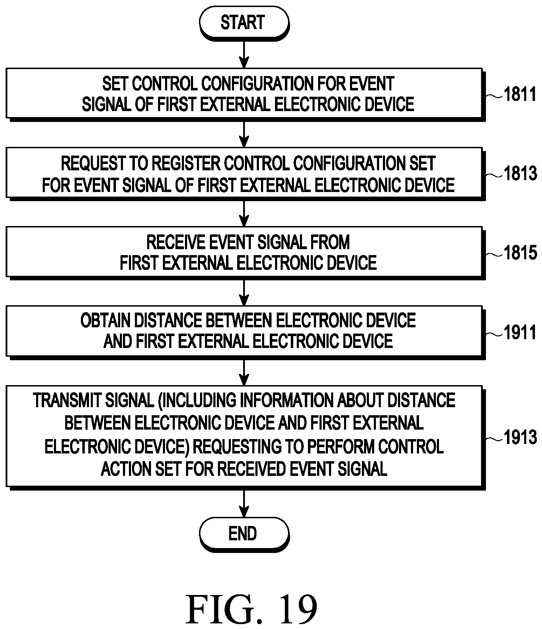

FIG. 19 is a diagram illustrating still another example of an operating process of an electronic device according to an embodiment.

An operating process of an electronic device 101 (e.g., an electronic device 101 in FIG. 1, 2, 3, or 4) illustrated in FIG. 19 may be an operating process according to a process which provides a location-based service (e.g., a find service) described in FIG. 14. Operations 1811 to 1815 in FIG. 19 may be the same as operations 1811 to 1815 in FIG. 18, so a detailed description thereof will be omitted.

Referring to FIG. 19, when receiving an event signal (e.g., a double click signal) from a first external electronic device 102 (an electronic device 102 in FIG. 1, or a first external electronic device 102 in FIG. 2, 3, or 5) via a communication module 190 (e.g., a communication module 190 in FIG. 1 or 4), in operation 1711, a processor (e.g., a processor 120 in FIG. 1 or 4) of the electronic device 101 may obtain a distance between the electronic device 101 and the first external electronic device 102 in operation 1911. In an embodiment, the processor 120 may obtain the distance between the electronic device 101 and the first external electronic device 102 based on at least one of a BLE scheme, a UWB scheme, or a GPS scheme. In an embodiment, the processor 120 may obtain the distance between the electronic device 101 and the first external electronic device 102 based on information about a distance between at least one fourth external electronic device (e.g., an anchor) and the first external electronic device 102 which is received from the at least one fourth external electronic device.

The processor 120, which obtains the distance between the electronic device 101 and the first external electronic device 102, may transmit, via the communication module 190, a signal requesting to perform a control action set for an event signal received from the first external electronic device 102 to a third external electronic device 108 (e.g., a server 108 in FIG. 1 or a third external electronic device 108 in FIG. 2, 3, or 5) in operation 1913. In an embodiment, the signal requesting to perform the control action set for the event signal received from the first external electronic device 102 may include information about the distance between the electronic device 101 and the first external electronic device 102.

According to an embodiment of the disclosure, an operating method of an electronic device (e.g., an electronic device 101 in FIG. 1, 2, 3, or 4) may include receiving an input signal of a first external electronic device (an electronic device 102 in FIG. 1, or a first external electronic device 102 in FIG. 2, 3, or 5) from the first external electronic device (the electronic device 102 in FIG. 1, or the first external electronic device 102 in FIG. 2, 3, or 5).

According to an embodiment of the disclosure, the operating method may further include obtaining at least one of a location of the first external electronic device (the electronic device 102 in FIG. 1, or the first external electronic device 102 in FIG. 2, 3, or 5) or an orientation direction of the first external electronic device (the electronic device 102 in FIG. 1, or the first external electronic device 102 in FIG. 2, 3, or 5).

According to an embodiment of the disclosure, the operating method may further include controlling an operation of at least one second external electronic device (e.g., second external electronic devices 210 in FIG. 2 or 3) or the electronic device (e.g., the electronic device 101 in FIG. 1, 2, 3, or 4) corresponding to control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may include selecting, among the at least one second external electronic device (e.g., the second external electronic devices 210 in FIG. 2 or 3), at least one target second external electronic device (e.g., the second external electronic devices 210 in FIG. 2 or 3) in which a control action included in the control configuration is to be performed, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may further include transmitting a signal requesting to perform the control action to a third external electronic device (e.g., a server 108 in FIG. 1, or a third external electronic device 108 in FIG. 2, 3, or 5).

According to an embodiment of the disclosure, the signal requesting to perform the control action may include information about the at least one target second external electronic device (e.g., the second external electronic devices 210 in FIG. 2 or 3).

According to an embodiment of the disclosure, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may include transmitting, to a third external electronic device (e.g., a server 108 in FIG. 1, or a third external electronic device 108 in FIG. 2, 3, or 5), a signal requesting to perform a control action included in the control configuration.

According to an embodiment of the disclosure, the signal requesting to perform the control action may include information about the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may include not performing a control action included in the control configuration, if a distance between the first external electronic device (the electronic device 102 in FIG. 1, or the first external electronic device 102 in FIG. 2, 3, or 5) and the electronic device (e.g., the electronic device 101 in FIG. 1, 2, 3, or 4) exceeds a threshold distance.

According to an embodiment of the disclosure, the operating method may further include setting the control configuration for controlling the operation of the at least one second external electronic device (e.g., the second external electronic devices 210 in FIG. 2 or 3) or the electronic device (e.g., the electronic device 101 in FIG. 1, 2, 3, or 4) in each of input signals of the first external electronic device (the electronic device 102 in FIG. 1, or the first external electronic device 102 in FIG. 2, 3, or 5).

According to an embodiment of the disclosure, the control configuration includes a control action to be performed by the at least one second external electronic device (e.g., the second external electronic devices 210 in FIG. 2 or 3) or the electronic device (e.g., the electronic device 101 in FIG. 1, 2, 3, or 4), or includes the control action to be performed by the at least one second external electronic device (e.g., the second external electronic devices 210 in FIG. 2 or 3) or the electronic device (e.g., the electronic device 101 in FIG. 1, 2, 3, or 4) and information about a space in which the control action is to be performed.

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may include identifying a space in which the first external electronic device (the electronic device 102 in FIG. 1, or the first external electronic device 102 in FIG. 2, 3, or 5) is located based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may further include selecting at least one second external electronic device (e.g., the second external electronic devices 210 in FIG. 2 or 3) located in the identified space as at least one target second external electronic device (e.g., the second external electronic devices 210 in FIG. 2 or 3) in which the control action is to be performed, if the identified space is identical to the space in which the control action is to be performed.

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may further include transmitting a signal requesting to perform the control action to a third external electronic device (e.g., the server 108 in FIG. 1, or the third external electronic device 108 in FIG. 2, 3, or 5).

According to an embodiment of the disclosure, the signal requesting to perform the control action may include information about the at least one target second external electronic device (e.g., the second external electronic devices 210 in FIG. 2 or 3).

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may include identifying a space in which the first external electronic device (the electronic device 102 in FIG. 1, or the first external electronic device 102 in FIG. 2, 3, or 5) is located based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may further include transmitting a signal requesting to perform the control action to a third external electronic device (e.g., the server 108 in FIG. 1, or the third external electronic device 108 in FIG. 2, 3, or 5), if the identified space is identical to the space in which the control action is to be performed.

According to an embodiment of the disclosure, the signal requesting to perform the control action may include information about the at least one target second external electronic device (e.g., the second external electronic devices 210 in FIG. 2 or 3).

According to an embodiment of the disclosure, if the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may include identifying a space in which the first external electronic device (the electronic device 102 in FIG. 1, or the first external electronic device 102 in FIG. 2, 3, or 5) is located based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

If the control configuration includes the control action to be performed by the at least one second external electronic device (e.g., the second external electronic devices 210 in FIG. 2 or 3) or the electronic device (e.g., the electronic device 101 in FIG. 1, 2, 3, or 4) and the information about the space in which the control action is to be performed, controlling the operation of the at least one second external electronic device (e.g., the second external electronic devices 210 in FIG. 2 or 3) or the electronic device (e.g., the electronic device 101 in FIG. 1, 2, 3, or 4) corresponding to the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for the input signal, based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may further include not performing the control action, if the identified space is not identical to the space in which the control action is to be performed.

According to an embodiment of the disclosure, the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may be obtained based on at least one of a Bluetooth low energy (BLE) scheme, a ultra wide band (UWB) scheme, or a global positioning system (GPS) scheme.

According to an embodiment of the disclosure, an operating method of a third external electronic device (e.g., a server 108 in FIG. 1, or a third external electronic device 108 in FIG. 2, 3, or 5) may receiving, from an electronic device (e.g., an electronic device 101 in FIG. 1, 2, 3, or 4), a signal requesting to perform a control action set for an input signal of a first external electronic device (an electronic device 102 in FIG. 1, or a first external electronic device 102 in FIG. 2, 3, or 5).

According to an embodiment of the disclosure, the operating method may further include transmitting a signal requesting to perform the control action to at least one target second external electronic device (e.g., second external electronic devices 210 in FIG. 2 or 3) which corresponds to information about the at least one target second external electronic device (e.g., the second external electronic devices 210 in FIG. 2 or 3) in which the control action is to be performed among the at least one second external electronic device (e.g., the second external electronic devices 210 in FIG. 2 or 3) included in the received signal.

According to an embodiment of the disclosure, the operating method may further include receiving, from the electronic device (e.g., the electronic device 101 in FIG. 1, 2, 3, or 4), a signal requesting to register, at the third external electronic device (e.g., the server 108 in FIG. 1, or the third external electronic device 108 in FIG. 2, 3, or 5), control configuration for controlling an operation of the at least one second external electronic device (e.g., the second external electronic devices 210 in FIG. 2 or 3) or the electronic device (e.g., the electronic device 101 in FIG. 1, 2, 3, or 4) which is set for each of input signals of the first external electronic device (the electronic device 102 in FIG. 1, or the first external electronic device 102 in FIG. 2, 3, or 5).

According to an embodiment of the disclosure, the operating method may further include registering the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for each of the input signals of the first external electronic device (the electronic device 102 in FIG. 1, or the first external electronic device 102 in FIG. 2, 3, or 5).

According to an embodiment of the disclosure, the control configuration may include the control action, or include the control action and information about a space in which the control action is to be performed.

According to an embodiment of the disclosure, the at least one target second external electronic device (e.g., the second external electronic devices 210 in FIG. 2 or 3) may be selected based on the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5).

According to an embodiment of the disclosure, the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may be obtained, based on at least one of a Bluetooth low energy (BLE) scheme, a ultra wide band (UWB) scheme, or a global positioning system (GPS) scheme.

According to an embodiment of the disclosure, an operating method of a third external electronic device (e.g., a server 108 in FIG. 1, or a third external electronic device 108 in FIG. 2, 3, or 5) may include receiving, from an electronic device (e.g., an electronic device 101 in FIG. 1, 2, 3, or 4), a signal requesting to perform a control action set for an input signal of a first external electronic device (an electronic device 102 in FIG. 1, or a first external electronic device 102 in FIG. 2, 3, or 5).

According to an embodiment of the disclosure, the operating method may further include performing the control action based on at least one of a location of the first external electronic device (the electronic device 102 in FIG. 1, or the first external electronic device 102 in FIG. 2, 3, or 5) or an orientation direction of the first external electronic device (the electronic device 102 in FIG. 1, or the first external electronic device 102 in FIG. 2, 3, or 5) included in the received signal.

According to an embodiment of the disclosure, performing the control action based on the at least one of a location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) included in the received signal may include selecting at least one target second external electronic device (e.g., the second external electronic devices in FIG. 2 or 3) in which the control action is to be performed among the at least one second external electronic device (e.g., the second external electronic devices in FIG. 2 or 3), based on the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) included in the received signal.

According to an embodiment of the disclosure, performing the control action based on the at least one of a location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) included in the received signal may further include transmitting a signal requesting to perform the control action to the at least one target second external electronic device (e.g., the second external electronic devices in FIG. 2 or 3).

According to an embodiment of the disclosure, the operating method may further include receiving, from the electronic device (e.g., the electronic device 101 in FIG. 1, 2, 3, or 4), a signal requesting to register, at the third external electronic device (e.g., the server 108 in FIG. 1, or the third external electronic device 108 in FIG. 2, 3, or 5), control configuration for controlling an operation of the at least one second external electronic device (e.g., the second external electronic devices 210 in FIG. 2 or 3) or the electronic device (e.g., the electronic device 101 in FIG. 1, 2, 3, or 4) which is set for each of input signals of the first external electronic device (the electronic device 102 in FIG. 1, or the first external electronic device 102 in FIG. 2, 3, or 5).

According to an embodiment of the disclosure, the operating method may further include registering the control configuration for controlling the operation of the at least one second external electronic device (e.g., the second external electronic devices 210 in FIG. 2 or 3) or the electronic device (e.g., the electronic device 101 in FIG. 1, 2, 3, or 4) which is set for each of the input signals of the first external electronic device (the electronic device 102 in FIG. 1, or the first external electronic device 102 in FIG. 2, 3, or 5).

According to an embodiment of the disclosure, the control configuration may include the control action, or include the control action and information about a space in which the control action is to be performed.

According to an embodiment of the disclosure, the at least one of the location of the first external electronic device (the electronic device 102 in FIG. 1, or the first external electronic device 102 in FIG. 2, 3, or 5) or the orientation direction of the first external electronic device (the electronic device 102 in FIG. 1, or the first external electronic device 102 in FIG. 2, 3, or 5) may be obtained, based on at least one of a Bluetooth low energy (BLE) scheme, a ultra wide band (UWB) scheme, or a global positioning system (GPS) scheme.

According to an embodiment of the disclosure, an electronic device may provide an automation service capable of controlling operations of second external electronic devices based on a location of a first external electronic device.

According to an embodiment of the disclosure, when a location of a first external electronic device changes, an electronic device may provide an automation service capable of automatically controlling operations of second external electronic devices based on the location of the first external electronic device without a user of the electronic device manually modifying control configurations for the automation service through a UI of an application, thereby preventing inconvenience to the user of the electronic device which is caused by manually modifying the control configurations for the automation services according to the change in the location of the first external electronic device.

According to an embodiment of the disclosure, if a distance between an electronic device and a first external electronic device is greater than or equal to a threshold distance, a find service may be prevented from being executed in the electronic device, thereby preventing inconvenience to a user of the electronic device which is caused by generation of an unnecessary ring even though the distance between the electronic device and the first external electronic device is greater than or equal to the threshold distance.

## Claims

1. An electronic device (101), comprising:
a communication module (190); and
at least one processor (120) operatively connected with the communication module, wherein the at least one processor is configured to:
receive an input signal of a first external electronic device (102) from the first external electronic device via the communication module,
obtain at least one of a location of the first external electronic device or an orientation direction of the first external electronic device, and
control an operation of at least one second external electronic device (210) or the electronic device corresponding to control configuration for controlling the operation of the at least one second external electronic device or the electronic device which is set for the input signal, based on the at least one of the location of the first external electronic device or the orientation direction of the first external electronic device.

2. The electronic device of claim 1, wherein the at least one processor is configured to:
select, among the at least one second external electronic device, at least one target second external electronic device (210) in which a control action included in the control configuration is to be performed, based on the at least one of the location of the first external electronic device or the orientation direction of the first external electronic device, and
transmit a signal requesting to perform the control action to a third external electronic device (108) via the communication module,
wherein the signal requesting to perform the control action includes information about the at least one target second external electronic device.

3. The electronic device of claim 1, wherein the at least one processor is configured to:
transmit, to a third external electronic device (108) via the communication module, a signal requesting to perform a control action included in the control configuration,
wherein the signal requesting to perform the control action includes information about the at least one of the location of the first external electronic device or the orientation direction of the first external electronic device.

4. The electronic device of claim 1, wherein the at least one processor is configured to refrain from performing a control action included in the control configuration, if a distance between the first external electronic device and the electronic device exceeds a threshold distance.

5. The electronic device of any one of claims 1 to 4, wherein the at least one processor is further configured to:
set the control configuration for controlling the operation of the at least one second external electronic device or the electronic device in each of input signals of the first external electronic device.

6. The electronic device of claim 5, wherein the control configuration includes a control action to be performed by the at least one second external electronic device or the electronic device, or includes the control action to be performed by the at least one second external electronic device or the electronic device and information about a space in which the control action is to be performed.

7. The electronic device of claim 6, wherein, if the control configuration includes the control action to be performed by the at least one second external electronic device or the electronic device and the information about the space in which the control action is to be performed, the at least one processor is configured to:
identify a space in which the first external electronic device is located based on the at least one of the location of the first external electronic device or the orientation direction of the first external electronic device,
select at least one second external electronic device located in the identified space as at least one target second external electronic device in which the control action is to be performed, if the identified space is identical to the space in which the control action is to be performed, and
transmit a signal requesting to perform the control action to a third external electronic device (108) via the communication module, and
wherein the signal requesting to perform the control action includes information about the at least one target second external electronic device.

8. The electronic device of claim 6, wherein, if the control configuration includes the control action to be performed by the at least one second external electronic device or the electronic device and the information about the space in which the control action is to be performed, the at least one processor is configured to:
identify a space in which the first external electronic device is located based on the at least one of the location of the first external electronic device or the orientation direction of the first external electronic device, and
transmit a signal requesting to perform the control action to a third external electronic device (108) via the communication module, if the identified space is identical to the space in which the control action is to be performed, and
wherein the signal requesting to perform the control action includes information about the at least one target second external electronic device.

9. The electronic device of claim 6, wherein, if the control configuration includes the control action to be performed by the at least one second external electronic device or the electronic device and the information about the space in which the control action is to be performed, the at least one processor is configured to:
identify a space in which the first external electronic device is located based on the at least one of the location of the first external electronic device or the orientation direction of the first external electronic device, and
refrain from performing the control action, if the identified space is not identical to the space in which the control action is to be performed.

10. The electronic device of any one of claims 1 to 9, wherein the at least one processor is further configured to:
obtain the at least one of the location of the first external electronic device or the orientation direction of the first external electronic device, based on at least one of a Bluetooth low energy (BLE) scheme, a ultra wide band (UWB) scheme, or a global positioning system (GPS) scheme.

11. A third external electronic device (108), comprising:
a communication module (511); and
at least one processor (513) operatively connected with the communication module, wherein the at least one processor is configured to:
receive, from an electronic device via the communication module, a signal requesting to perform a control action set for an input signal of a first external electronic device (102), and
transmit, via the communication module, a signal requesting to perform the control action to at least one target second external electronic device (210) which corresponds to information about the at least one target second external electronic device in which the control action is to be performed among at least one second external electronic device (210) included in the received signal.

12. The third external electronic device of claim 11, wherein the at least one processor is configured to:
receive, from the electronic device via the communication module, a signal requesting to register, at the third external electronic device, control configuration for controlling an operation of the at least one second external electronic device or the electronic device which is set for each of input signals of the first external electronic device, and
register the control configuration for controlling the operation of the at least one second external electronic device or the electronic device which is set for each of the input signals of the first external electronic device.

13. The third external electronic device of claim 12, wherein the control configuration includes the control action, or includes the control action and information about a space in which the control action is to be performed.

14. The third external electronic device of any one of claims 11 to 13, wherein the at least one target second external electronic device is selected based on the location of the first external electronic device or the orientation direction of the first external electronic device.

15. The third external electronic device of claim 14, wherein the at least one of the location of the first external electronic device or the orientation direction of the first external electronic device is obtained, based on at least one of a Bluetooth low energy (BLE) scheme, a ultra wide band (UWB) scheme, or a global positioning system (GPS) scheme.
